# EUROPEAN PATENT APPLICATION

(11) **EP 4 700 630 A1**
(43) Date of publication of application: **25.02.2026**
(21) Application number: 23943313.9
(22) Date of filing: 21.11.2023
(51) Int. Cl.: G06F 21/64

(54) **BLOCK DATA PROCESSING METHOD AND APPARATUS, AND ELECTRONIC DEVICE AND STORAGE MEDIUM**

(30) Priority: 28.06.2023 CN 202310781850
(71) Applicant: Tencent Technology (Shenzhen) Company Limited, Shenzhen, Guangdong 518057 (CN)
(72) Inventor: SHAO, Zhuguang, Shenzhen, Guangdong 518057 (CN)
(74) Representative: Gunzelmann, Rainer
(86) International application number: PCT/CN2023/132793
(87) International publication number: WO 2025/000836

(57) **Abstract**

The present application is applied to the technical field of the Internet and other technical fields, such as cloud computing and the Internet of Vehicles, related to Internet technology. Disclosed are a block data processing method and apparatus, and an electronic device and a storage medium. The method comprises: acquiring a voting right requirement of a service object to be subjected to processing, and constructing a service node group according to the voting right requirement of said service object, wherein the service node group comprises a service node of said service object and at least one shadow node; the service node of said service object is used for executing block data processing according to stored block ledger data; and block data processing executed by the shadow node remains consistent with the block data processing of the service node of said service object, and the shadow node does not store block ledger data for the block data processing, such that the voting right requirement of any service object can be met, thereby reducing the resource occupation amount of a service object with a high weight proportion, and thus improving the operation efficiency of a blockchain network.

## Description

### RELATED APPLICATION

This application claims priority to Chinese Patent Application No. 202310781850.9, filed with the China National Intellectual Property Administration on June 28, 2023, and entitled "METHOD FOR PROCESSING BLOCK DATA AND APPARATUS, ELECTRONIC DEVICE, AND STORAGE MEDIUM".

### FIELD OF THE TECHNOLOGY

The present disclosure relates to the field of computer technology, and in particular to block data processing technology.

### BACKGROUND OF THE DISCLOSURE

With the continuous development of computer networks, the related technologies of blockchains have become increasingly mature. Blockchain is a new application mode of computer technologies such as distributed data storage, point-to-point transmission, consensus mechanisms, and encryption algorithms. Considering that information stored on a blockchain cannot be forged or tampered with, an increasing number of enterprises are willing to build service nodes based on blockchains and store service data on these service nodes to manage the service data.

Services provided by different service systems may have different importance, and hence different service systems have different weights in the same blockchain, that is, they have different voting power in the blockchain. A service system with higher weights needs to deploy more consensus nodes on the blockchain. For example, it is assumed that there are three service systems serving as participants in the entire blockchain network. When participant A wants to have a higher voting power, it needs to deploy more consensus nodes. For example, the participants are A, B, and C. When participant A requires higher voting power, 2 consensus nodes may be deployed for participant A, while 1 consensus node may be deployed for each of participant B and participant C. Thus, participant A having the 2 consensus nodes has a higher voting power when the participants vote for transactions initiated in the blockchain.

Since each consensus node needs to store a ledger locally, the participant who requires higher voting power occupying more resources, such as central processing unit (CPU) resources and storage resources, due to a lager quantity of consensus nodes. That is, there is significant resource consumption.

### SUMMARY

In view of the above, embodiments of the present disclosure provide a method and an apparatus for processing block data, an electronic device, and a storage medium, so as to reduce the amount of resource occupied by service parties with high voting powers and improve the operation efficiency of the blockchain network.

According to an aspect, an embodiment of the present disclosure provides a method for processing block data, executable by an electronic device, including, but not limited to, the following operations: determining a voting power required by a service party; and constructing a group of nodes for the service party according to the voting power required by the service party, where the group of nodes comprises a service node belonging to the service party and at least one shadow node for the service node; wherein the service node is configured to perform processing on block data according to a locally stored block ledger; and where the at least one shadow node is configured to perform processing, which is consistent with the processing performed by the service node, on the block data; and where the at least one shadow node does not store the block ledger locally

According to another aspect, an embodiment of the present disclosure provides a method for processing block data, executable by an electronic device, including: in response to receiving a proposal instruction transmitted by a service node belonging to a service party, extracting information of a block from the proposal instruction to generate a proposal message, where the proposal message is configured to trigger each node in a blockchain network to vote for whether to lock on the block, the service node and the shadow node are in a group of nodes for the service party, the group of nodes is constructed through the foregoing method; in response to receiving a lock-on-block voting instruction transmitted by the service node, extracting a first vote content from the lock-on-block voting instruction, and voting, using the first vote content, for whether to lock on the block indicated in the proposal message; and in response to receiving a block-commit voting instruction transmitted by the service node, extracting a second vote content from the block-commit voting instruction, and voting, using the second vote content, for whether to commit the block indicated in the proposal message to complete consensus on the block, where the second vote content indicates a voting result of each service node on whether to lock on the block.

According to another aspect, an embodiment of the present disclosure provides a method for processing block data for a blockchain network, the blockchain network including a plurality of nodes, the method being executable by an electronic device and including: determining a service node belonging to a service party from the plurality of nodes of the blockchain network; calculating a quantity of shadow nodes to be configured for the service node of the service party according to a voting power required by the service party on the service node and a quantity of nodes in the blockchain network; and configuring at least one shadow node for the service node according to the quantity of shadow nodes, where the service node stores a block ledger for processing the block data, processing performed by the at least one shadow node on the block data is consistent with processing performed by the service node on the block data, and the at least one shadow node does not store the block ledger locally.

According to another aspect, an embodiment of the present disclosure provides an apparatus for processing block data deployed on an electronic device, including: a determining module, configured for determining a voting power required by a service party; and a first module, configured for constructing a group of nodes for the service party according to the voting power required by the service party, where the group of nodes comprises a service node belonging to the service party and at least one shadow node for the service node; where the service node is configured to perform processing on block data according to a locally stored block ledger; and where the at least one shadow node is configured to perform processing, which is consistent with the processing performed by the service node, on the block data; and where the at least one shadow node does not store the block ledger locally.

According to another aspect, an embodiment of the present disclosure provides an apparatus for processing block data deployed on a shadow node, including: a second module, configure for in response to receiving a proposal instruction transmitted by a service node belonging to a service party, extracting information of a block from the proposal instruction to generate a proposal message, wherein the proposal message is configured to trigger each node in a blockchain network to vote for whether to lock on the block, the service node and the shadow node are in a group of nodes for the service party, the group of nodes is constructed through the foregoing method; a third module, configured for in response to receiving a lock-on-block voting instruction transmitted by the service node, extracting a first vote content from the lock-on-block voting instruction, and voting, using the first vote content, for whether to lock on the block indicated in the proposal message; and a fourth module, configured for in response to receiving a block-commit voting instruction transmitted by the service node, extracting a second vote content from the block-commit voting instruction, and voting, using the second vote content, for whether to commit the block indicated in the proposal message to complete consensus on the block, where the second vote content indicates a voting result of each service node on whether to lock on the block.

According to another aspect, an embodiment of the present disclosure provides an apparatus for processing block data for a blockchain network, the blockchain network including a plurality of nodes, the apparatus being deployed on an electronic device and including: a determining module, configured for determining a service node belonging to a service party from the plurality of nodes of the blockchain network; a calculating module, configured for calculating a quantity of shadow nodes to be configured for the service node of the service party according to a voting power required by the service party on the service node and a quantity of nodes in the blockchain network; and a configuring module, configured for configuring at least one shadow node for the service node according to the quantity of shadow nodes, where the service node stores a block ledger for processing the block data, processing performed by the at least one shadow node on the block data is consistent with processing performed by the service node on the block data, and the at least one shadow node does not store the block ledger locally.

According to another aspect, an embodiment of the present disclosure further provides an electronic device, including a processor and a memory, where: the memory is configured to store a program; and the program when executed by the processor implements the forgoing method for processing block data.

According to another aspect, an embodiment of the present disclosure further provides a computer-readable storage medium storing a computer program, where the computer program when executed by a processor implements the forgoing method for processing block data.

According to another aspect, an embodiment of the present disclosure further provides a computer program product, including a computer program, where the computer program when executed by a processor implements the forgoing method for processing block data..

In the embodiments of the present disclosure, a voting power required by a service party is acquired, and a group of nodes is constructed according to the voting power required by the service party, where the group of nodes includes a service node of the service party and at least one shadow node. The service node of the service party in the embodiments of the present disclosure performs block data processing according to a locally stored block ledger. The at least one shadow node is configured to perform processing, which is consistent with the processing performed by the service node, on the block data. The shadow node does not store the block ledger locally. Herein the shadow node need not store the relevant ledger data of the blockchain network locally while being capable of performing processing consistent with that of the service node of the service party or default processing. Thus, resources occupied by a service party with a high voting power are reduced, and the operation efficiency of the blockchain network is improved. Due to the reduced resource occupation, the required voting power of any service party can be met while improving the operation efficiency of the blockchain network.

### BRIEF DESCRIPTION OF THE DRAWINGS

To describe the technical solutions of the embodiments of the present disclosure more clearly, the following briefly introduces the accompanying drawings required for describing the embodiments. It is clear that the accompanying drawings in the following description show only some embodiments of the present disclosure, and a person of ordinary skill in the art may still derive other drawings from these accompanying drawings without creative efforts.
FIG. 1 is a schematic structural deployment diagram of a relevant implementation environment in the related technologies.
FIG. 2 is a schematic diagram of an implementation environment of data processing according to an embodiment of the present disclosure.
FIG. 3 is a schematic structural deployment diagram of an implementation environment according to an embodiment of the present disclosure.
FIG. 4 is a schematic diagram of application of a service system according to an embodiment of the present disclosure.
FIG. 5 is a flowchart of a method for processing block data according to an embodiment of the present disclosure.
FIG. 6 is a schematic structural diagram of configuration information of a shadow node according to an embodiment of the present disclosure.
FIG. 7 is a diagram of exemplary configuration information of a shadow node according to an embodiment of the present disclosure.
FIG. 8a is a flowchart of a method for processing block data according to another embodiment of the present disclosure.
FIG. 8b is a flowchart of a proposal stage of a shadow node according to an embodiment of the present disclosure.
FIG. 9 is a flowchart of a proposal stage of a service node of a service party according to an embodiment of the present disclosure.
FIG. 10 is a flowchart of consensus when a service node of a service party is a proposal node according to an embodiment of the present disclosure.
FIG. 11 is a flowchart of a prevote stage of a shadow node according to an embodiment of the present disclosure.
FIG. 12 is a flowchart of a precommit stage of a shadow node according to an embodiment of the present disclosure.
FIG. 13 is a flowchart of whole consensus processing performed by a shadow node according to an embodiment of the present disclosure.
FIG. 14 is a schematic diagram of modularization of an apparatus for processing block data according to an embodiment of the present disclosure.
FIG. 15 is a schematic structural diagram of an electronic device according to an embodiment of the present disclosure.

### DESCRIPTION OF EMBODIMENTS

To make the objectives, technical solutions, and advantages of the present disclosure clearer, the following further describes the present disclosure in detail with reference to the accompanying drawings and the embodiments. The specific embodiments described herein are merely used to explain the present disclosure but are not intended to limit the present disclosure.

In the following descriptions, the term "some embodiments" describes a subset of all possible embodiments. However, "some embodiments" may be the same subset or different subsets of all possible embodiments and may be combined with each other without conflict.

Unless otherwise defined, meanings of all technical and scientific terms used herein are the same as those usually understood by a person skilled in the art to which the present disclosure belongs. Terms used herein are merely intended to describe the embodiments of the present disclosure but are not intended to limit the present disclosure.

Before the embodiments of the present disclosure are further described in detail, a description is made on nouns and terms in the embodiments of the present disclosure, and the nouns and terms in the embodiments of the present disclosure are applicable to the following explanations.

Blockchain is a new application mode of computer technologies such as distributed data storage, point-to-point transmission, consensus mechanisms, and encryption algorithms. A blockchain is essentially a decentralized database and is a string of data blocks generated in a cryptographic manner. Each data block includes information about a batch of network transactions, which is configured to verify validity of the information (anti-counterfeiting) and generate a next block. A blockchain may include a blockchain bottom platform, a platform product service layer, and an application service layer. Blockchains may include public chains, consortium chains, and private chains, where the public chains refer to blockchains where anyone can access the blockchain network at any time to read data, transmit data, or contend for bookkeeping; the consortium chains refer to blockchains jointly managed by several organizations or institutions; the private chains refer to blockchains with a certain degree of centralized control, where the writing right of a ledger of each private chain is controlled by an organization or institution, and the access and use of data are subject to strict permission management.

Block: it is a data packet that carries transaction data (i.e., transaction services) on the blockchain network and is a data structure marked with a timestamp and a hash value corresponding to a previous block. The transaction in the block is verified and determined through the consensus mechanism of the network.

Block height: it is configured for identifying the number of blocks connected to the blockchain and may be configured for determining the position of a block in the blockchain.

Based on this, feature concepts possibly involved in the present disclosure will be explained and described.

Consensus algorithm: it is a specification followed by all blockchain nodes, and is a series of processes and rules generated to achieve distributed consistency protocols. After nodes distributed in different regions negotiate and interact according to this set of rules, a consistent decision can always be reached on one or some issues, thus achieving consistency among different nodes in a distributed system.

TBFT algorithm: i.e., Tendermint BFT consensus algorithm, which is a Byzantine fault-tolerant consensus algorithm that supports nodes that meet a 3f+1 rule, where f represents the allowed number of malicious nodes in the entire network. In a case that the number of malicious nodes exceeds such number, it will result in a decrease in the security of the entire network, or even make the entire network unusable.

Consensus nodes: also known as verification nodes, which are nodes in the blockchain that perform consensus processing on blocks generated by leader nodes, are nodes responsible for verifying transactions and generating new blocks in the blockchain network, and need to reach a unanimous decision through the consensus algorithm.

Proposal: it is a request or proposal transmitted by a service node of a service party to verification nodes for consensus processing on a certain block.

Based on the theoretical foundation mentioned above, as well as the research and progress of the blockchain technology, the blockchain technology has been studied and applied in a plurality of fields, such as common digital assets, financial asset transaction settlement, deposit certificate anti-counterfeiting, and data services. It is believed that with the development of the technology, the blockchain technology will be applied in more fields and play an increasingly important role.

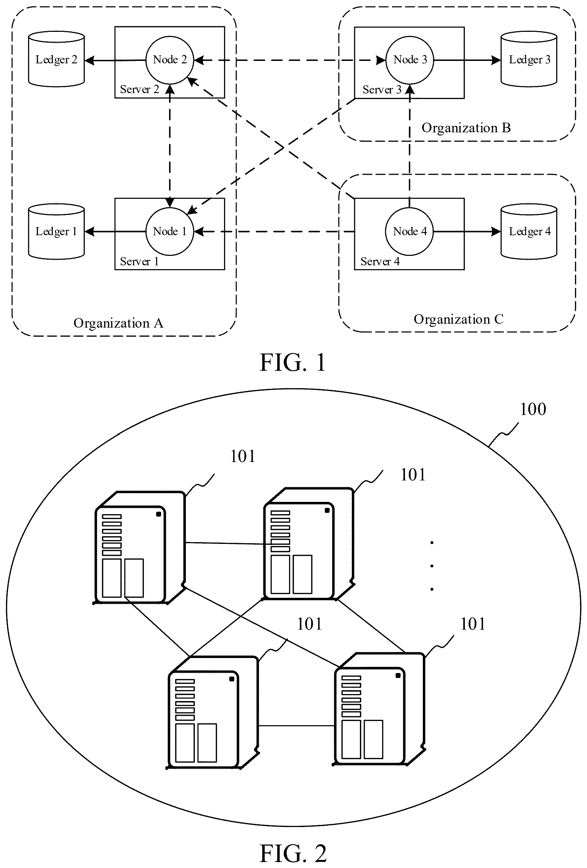

With the continuous development of computer networks, the related technologies of blockchains have become increasingly mature. Blockchain is a new application mode of computer technologies such as distributed data storage, point-to-point transmission, consensus mechanisms, and encryption algorithms. Considering that information stored on a blockchain cannot be forged or tampered with, more and more enterprises will build service nodes on the blockchain to store service data on corresponding service nodes and achieve management of service data. However, for some service systems, due to the varying importance of their service nature, different service systems have different weights in the same blockchain, i.e., the voting values in the blockchain are higher. In this case, for service systems with higher weights, it is necessary to deploy a corresponding number of consensus nodes on the blockchain. For example, referring to FIG. 1, assuming that the entire blockchain network includes three service systems as participants, in a case that participant A wishes to have a higher proportion of voting power, it needs to deploy more consensus nodes. For example, for participants A, B, and C, when participant A requires higher voting power, 2 consensus nodes may be deployed for participant A, and 1 consensus node may be deployed for each of participant B and participant C. At this time, participant A has 2 consensus nodes and has higher voting power for voting transactions initiated in the blockchain.

However, since each consensus node needs to store a ledger, for participants who require higher voting power, having more consensus nodes also means occupying more resources, such as CPU resources and storage resources, resulting in significant resource consumption.

For this reason, solutions provided in embodiments of the present disclosure involve technologies such as blockchain. Through the shadow node in the group of nodes, proposal processing, lock-on-block processing, or block commitment processing is performed according to the instruction of the service node of the service party. In addition, the shadow node does not need to store relevant ledger data of the blockchain network. At the same time, the shadow node can perform action in processing consistent with or default to that of the service node of the service party, thus effectively reducing the amount of resources occupied by a service party with a high voting power, and improving the operation efficiency of the blockchain network.

The method for processing block data according to the embodiment of the present disclosure can be applied to any electronic device with data processing and computing capabilities. The electronic device may be any terminal or server. The terminal and the server are connected through a communication network. A server is a node server in the blockchain network. A plurality of servers form the blockchain network. In a case that the electronic device in all embodiments of the present disclosure is a server, the server is an independent physical server, or a server cluster or distributed system composed of a plurality of physical servers, or a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. In some embodiments, the terminal is, but not limited to, a smart phone, a tablet, a laptop, and a desktop computer.

The terminal involved in all embodiments of the present disclosure may include, but not limited to, a mobile phone, a computer, an intelligent voice interaction device, a smart household electrical appliance, a vehicle-mounted terminal, and an aircraft. The embodiment of the present disclosure may be applied to various scenarios, including but not limited to cloud technology, artificial intelligence, smart transportation, and assisted driving.

In embodiments of the present disclosure including the embodiments of both the claims and the specification (hereinafter referred to as "all embodiments of the present disclosure"), a computer program capable of implementing the method for processing block data according to the embodiment of the present disclosure may be deployed and executed on one electronic device, or executed on a plurality of electronic devices located at one place, or executed on a plurality of electronic devices distributed at a plurality of places and interconnected through a communication network. The plurality of electronic devices distributed at a plurality of places and interconnected through the communication network can form a blockchain network.

A blockchain network can be formed based on a plurality of electronic devices. The electronic device implementing the method for processing block data in all embodiments of the present disclosure may be a node in the blockchain network. This node has a computer program stored therein that can execute the method for processing block data. The computer program firstly constructs a group of nodes including a service node of a service party and at least one shadow node based on a voting power required by the service party, so that the shadow node performs proposal processing, lock-on-block processing, or block commitment processing according to an instruction of the service node of the service party. In addition, in all embodiments of the present disclosure, the shadow node does not store the relevant ledger data of the blockchain network, and only needs to perform processing consistent with that of the service node of the service party or default processing, thus reducing the amount of resources occupied by a service party with a high voting power, and improving the operation efficiency of the blockchain network.

As shown in FIG. 2, it is a schematic diagram of an implementation environment according to an embodiment of the present disclosure. Referring to FIG. 2, the implementation environment includes a plurality of nodes 101. The plurality of nodes 101 refers to various terminals or servers in a data processing system 100, including computers, mobile phones, tablets, other terminals, backend servers for this program logic, or cloud servers that provide cloud computing and cloud storage services. The node 101 may also be referred to as service nodes or consensus nodes. During normal operation, each node 101 may receive input information and maintain shared data in the data processing system 100 based on the received input information. In order to ensure information exchange in the data processing system 100, there may be information connections between the nodes in the data processing system 100, and information may be transmitted between the nodes through the information connections. For example, in a case that any node in the data processing system 100 receives input information, other nodes in the data processing system 100 will acquire the input information according to a consensus algorithm and store it as data in the shared data, so that the data stored on all nodes in the data processing system 100 are consistent. The relevant node 101 may construct a group of nodes including a service node of the service party and at least one shadow node according to the voting power required by the service party. The constructed shadow node may be directly applied to downstream tasks for relevant block consensus operations (including, but not limited to, proposal processing, lock-on-block processing, or block commitment processing).

Exemplarily, the node 101 firstly acquires a voting power required by a service party and then constructs a group of nodes according to the voting power required by the service party, where the group of nodes includes a service node of the service party and at least one shadow node. As an example, the voting power required by the service party is indicated by an instruction or request issued by a server, a node, or any other device belonging to the service party. Then, the shadow node may perform the following processing: a. extracting, in response to a proposal instruction transmitted by a service node of a service party, information of the block from the proposal instruction, and performing proposal processing to generate a proposal message, b. extracting, in response to a lock-on-block voting instruction transmitted by the service node of the service party, first vote content from the lock-on-block voting instruction, and determining whether to vote for locking on a block indicated in a proposal message; and c. extracting, in response to a block-commit voting instruction transmitted by the service node of the service party, second vote content from the block-commit voting instruction, and determining whether to vote for committing a block indicated in a proposal message, so as to complete consensus on the information of the block. In this way, the shadow node in the group of nodes constructed in all embodiments of the present disclosure can achieve the same proposal or consensus function as ordinary nodes without occupying ledger storage resources, meet the required voting power of any service party, and improve the operation efficiency of the blockchain network by reducing the resource occupation rate.

The method for processing block data may be applied to various scenarios.

For example, in a scenario where the service party performs consensus voting, in a case that authorization of the service party is obtained, a group of nodes is constructed in the node 101 of the service party according to the voting power required by the service party. Correspondingly, the group of nodes includes a service node of the service party and at least one shadow node. The number of the shadow nodes is set according to the voting power required by the service party. The shadow nodes in the group of nodes can perform proposal processing, lock-on-block processing, or block commitment processing according to an instruction of the service node of the service party. In addition, the shadow node does not store the relevant ledger data of the blockchain network and only needs to perform processing consistent with that of the service node of the service party or default processing. Thus, the action in processing of the shadow node is kept consistent with the action of the service node of the service party, increasing the voting weight of the service node of the service party while meeting the voting power required by the service party. In addition, the shadow node occupies fewer resources, thus effectively improving the operation efficiency of the blockchain network. The above application scenario only serves as an example. In practical application, in addition to the server configured to perform the above data processing process, other devices with data processing capabilities such as terminals may also be configured to construct the group of nodes and performing the related service processing process. Besides, other devices in addition to terminal devices may also be configured to carry the completed group of nodes. The application scenario of the method for processing block data according to the embodiment of the present disclosure is not limited here in any way.

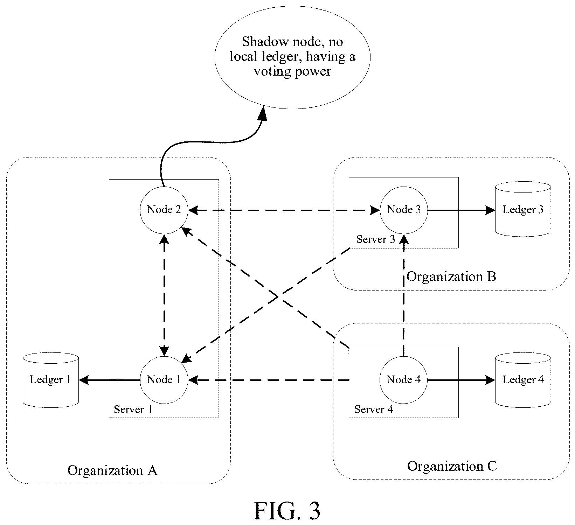

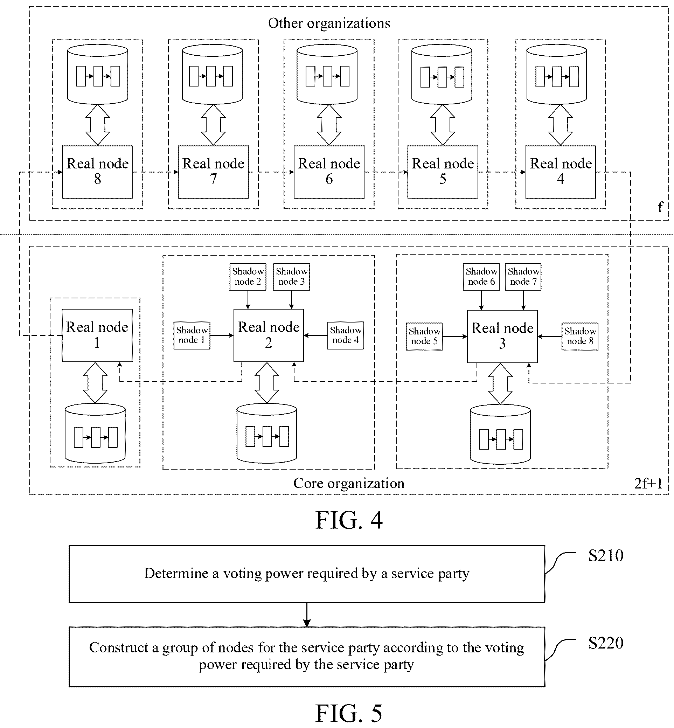

Based on the implementation environment shown in FIG. 2, an embodiment of the present disclosure provides an application scenario for consensus node weight allocation. In this scenario, there are information connections between nodes, and information may be transmitted between the nodes through the information connections. The node may construct a group of nodes for a target application to increase its voting power in the node network. For example, referring to FIG. 3, in a four-node network, according to the voting power required by the service party, the voting power of its corresponding node is required to be 50%. Therefore, a group of nodes including one service node (Node 1) of the service party and one shadow node (Node 2) are constructed, so as to achieve weight allocation to consensus nodes. In addition, the shadow nodes does not store relevant ledger data in the blockchain network, but only performs processing consistent with that of the service node of the service party or default processing, i.e., Node 2 does not have an actual ledger, but has a voting right, thus meeting the required voting power of any service party, reducing the amount of resources occupied by a service party with a high voting power, and improving the operation efficiency of the blockchain network. Exemplarily, the target application may be an application platform for resource allocation, as well as web link, mini program, or application plugin with a service function such as transaction validity verification or shared state update set in a multimedia application (such as film and television application, short video application, or music application), a social application, a gaming application, or a navigation application. For example, in an actual service system, its deployment situation may be as shown in FIG. 4, where each real node may serve as the service node of the service party corresponding to the shadow node, i.e., the service node of the service party.

In all embodiments of the present disclosure, in a case that it involves acquiring data such as feature data, behavior data, historical data, and location information of the object related to the identity or characteristics of the object for relevant processing, permission or authorization from the object will be obtained first, and the collection, use, processing and the like of these data will comply with relevant laws, regulations, and standards. In addition, in a case that the embodiment of the present disclosure needs to acquire sensitive personal information of the object, separate permission or consent of the object will be obtained through a pop-up or by jumping to a confirmation page. After the separate permission or consent of the object is obtained, necessary object related data for the normal operation in all embodiments of the present disclosure are acquired.

As shown in FIG. 5, it is a flowchart of a method for processing block data according to an embodiment of the present disclosure. The executing entity of the method for processing block data may be any electronic device described above. Referring to FIG. 5, the method includes the following operations:
S210: Determining a voting power required by a service party.
S220: Construct a group of nodes for the service party according to the voting power required by the service party.

The group of nodes comprises a service node belonging to the service party and at least one shadow node for the service node. The service node is configured to perform processing on block data according to a locally stored block ledger. Here each service node refers to a consensus node that is configured as follows in the blockchain system. The at least one shadow node is configured to perform processing, which is consistent with the processing performed by the service node, on the block data. The at least one shadow node does not store the block ledger locally. In all embodiments of the present disclosure, the processing on the block data may refer to processing during generation of a new block on the blockchain. For example, the processing may be of proposal, prevote, and precommit stages.

In all embodiments of the present disclosure, the service party may refer to a participant or an organization that participates in a certain service application. The service party may be an enterprise, a related institution, a group, or any other entity participating in the blockchain service network. In all embodiments of the present disclosure, the voting power, a.k.a. voting weight, may refer to a weight endowed due to one or more nodes in a voting process. Correspondingly, in all embodiments of the present disclosure, the voting power required by the service party may refer to a voting power with which the service node of the service party needs to be actually endowed, i.e., a voting weight that the service node needs to have.

In all embodiments of the present disclosure, the shadow node only performs relevant consensus service processing, such as proposal processing, lock-on-block processing, or block commitment processing based on the instruction of the service node of the service party, thus keeping the action in processing of the shadow node consistent with the action of the service node of the service party, improving the voting weight of the service node of the service party, and meeting the voting power required by the service party. The consistency of the action or processing between the shadow node and the service node refers to that the shadow node follows the decision of the service node of the service party, e.g., during generation of a new block, the shadow node votes for the same decision as the service node, vote for a default decision as instructed by the service node, and/or make a proposal as instructed by the service node. In addition, the shadow node does not store relevant ledger data in the blockchain network, thus effectively reducing the amount of resources occupied by the shadow node and improving the operation efficiency of the blockchain network.

Specifically, in all embodiments of the present disclosure, the group of nodes constructed according to the voting power required by the service party may include a service node of the service party and at least one shadow node. The construction of the group of nodes refers to establishing association among the service node and the shadow nodes, such that the action of the shadow nodes is consistent with the action of the service node in the same group. The service node belonging to the service party is a real node under control of the service party and may serve as a host node. Therefore, the service node of the service party may also be called a host node, which means that the block ledger is locally stored in that node. In all embodiments of the present disclosure, the number of the shadow nodes of the service node may be adjusted according to the required voting power. Exemplarily, taking a network security application scenario as an example, in all embodiments of the present disclosure, a corresponding group of nodes may be constructed according to the required voting power of each network security node. For example, to improve the security of the network, a certain network security node with high credibility needs a higher weight in a network security verification process, so that its voting has a greater influence. Therefore, in all embodiments of the present disclosure, the number of the shadow nodes included in the corresponding group of nodes may be determined based on the required voting power of the relevant network security node, so as to construct a group of nodes that meets the required voting power of the network security node. Correspondingly, in all embodiments of the present disclosure, the shadow node may perform relevant service processing according to the instruction of the service node of the service party, so as to keep its action in processing consistent with the action of the service node of the service party, thus increasing the voting weight of the service node of the service party, i.e., increasing the voting influence of the corresponding network security node.

In order to effectively improve the voting weight of the service party and meet the required voting power of any service party, in all embodiments of the present disclosure, the operation of constructing a group of nodes based on the voting power required by the service party may include, but not limited to, S310 to S320:
S310: Configuring one or more shadow nodes for the service node according to the voting power required by the service party.

In all embodiments of the present disclosure, the service node of the service party may be an ordinary node, i.e., is a host node of the shadow node, and the service node of the service party will store the relevant block ledger in the blockchain network. Correspondingly, in all embodiments of the present disclosure, the shadow node does not have actual block ledger, i.e., the shadow node does not store relevant block ledger in the blockchain network. Moreover, the shadow node has a right to vote just like the ordinary node, which means that other nodes can receive the voting message transmitted by the shadow node. Therefore, the other nodes cannot perceive whether the node is a shadow node, and they do not know that the shadow node does not store the block ledger locally. In all embodiments of the present disclosure, by analyzing the voting requirement of the service party, one or more shadow nodes may be configured for the service node of any service party to achieve the voting power required by such service party.

As an example, it is assumed that there are four service parties, each of which controls one service node. The voting weight of the service node of each service party is thus 25%. In a case that service party A needs to have a voting weight of 40%, one shadow node may be configured for the service node of service party A according to the voting power required by the service party, i.e., according to the voting power of 40%. After the shadow node is configured for the service node of service party A, there are five nodes in the network. It is noted that the nodes of other service parties cannot distinguish whether the configured node is a shadow node or an ordinary service node, and the shadow node also has the voting weight identical to the other nodes. When processing block data, the action of the shadow node is consistent with the action of the service node of service party A, and thus the actual voting weight of service party A is increased to 40%. Similarly, a certain number of shadow nodes can be configured for the service node of a certain service party when a certain voting power is required, such that the voting weight of the service party is increased to meet the required voting power.

S320: Configure initial settings of each shadow node, where the at least one shadow node with the configured initial settings and the service node form the group of nodes for the service party

In all embodiments of the present disclosure, the initial settings may refer to settings related to details of the shadow node, such as an identifier, a network address, security settings, and/or other settings of the shadow node. In all embodiments of the present disclosure, after configuring the corresponding number of shadow nodes for the service node of the service party based on the voting power required by the service party, initial settings configuration may be performed on each shadow node, and then a configured shadow node is combined with the service node of the service party to obtain a group of nodes. For example, two shadow nodes are configured for the corresponding service node according to the voting power required by the service party. Next, in all embodiments of the present disclosure, initialization is first performed on the two shadow nodes respectively, i.e., initial settings configuration, such as configuration of the relevant identifier, consensus algorithm parameters, network address, and other related node information parameters, is performed. After the relevant initialization information configuration is completed, the shadow node is equivalent to an ordinary node when perceived by the outside world. Except for the corresponding service node of the service party that can perceive that it is a shadow node, other nodes recognize it as a normal node. Next, in all embodiments of the present disclosure, the two shadow nodes that have been configured are combined with the corresponding service node of the service party to construct a service node combination that meets the required voting power of the relevant service party.

In order to ensure that the shadow node can perform an action consistent with the action of the service node of the service party and can perform relevant action in processing, in all embodiments of the present disclosure, the operation of performing initial settings configuration on each shadow node may include, but not limited to, S410 to S430:
S410: Configure node mapping information between the shadow node and the service node, wherein the node mapping information indicates the shadow node is for the service node.

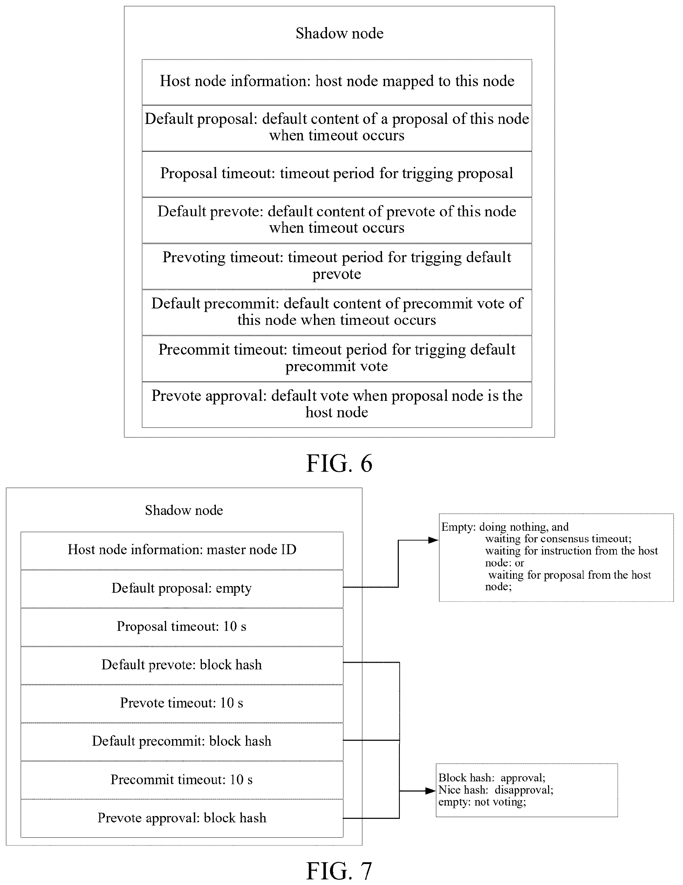

In all embodiments of the present disclosure, the node mapping information may indicate a mapping relationship between the shadow node and the corresponding service node of the service party, i.e., indicate the real node (i.e., a node stores the ledger locally) for which the shadow node serves. In all embodiments of the present disclosure, the shadow node being "for the service node" refers to that the shadow node is under instruction of the service node. In all embodiments of the present disclosure, the node mapping information may represent an association relationship between each shadow node and the corresponding service node. By configuring the node mapping information between the shadow node and the service node of the service party, a corresponding relationship between the service node of the service party and the shadow node is constructed, so that the shadow node can receive an instruction from the service node of the service party and keep its action in processing consistent with the action of the service node of the service party. For example, as shown in FIG. 6 and FIG. 7, after a corresponding number of shadow nodes are configured for the service node of the service party based on the voting power required by the service party, in all embodiments of the present disclosure, node mapping information is configured for each shadow node to associate the corresponding service node of the service party, so that the shadow nodes can perform the relevant action in processing according to the instruction of the service node of the service party.

S420: Configure default-operation information of the shadow node, wherein the default-operation information indicates an action which the shadow node performs when not receiving an instruction transmitted by the service node.

In all embodiments of the present disclosure, the default-operation information indicates the operation or the action performed by the shadow node when it does not receive an instruction from the corresponding service node. Due to reasons such as data transmission errors, in some cases, the shadow node may not receive the instruction from the service node of the service party, or the service node of the service party may fail to transmit the relevant instruction to the shadow node in time. In this case, the shadow node needs to perform a relevant default operation in consensus processing. Specifically, as shown in FIG. 6 and FIG. 7, in all embodiments of the present disclosure, the configured default-operation information may include default content for proposal, default content for prevote, and default content of precommit.

The default-operation information mentioned in all embodiments of the present disclosure may be adaptively configured according to the requirement of the service node of the service party. For example, for a prevote message transmitted by the service node of the service party, it may be set as default approval, and for a prevote message transmitted by a service node of another service party, it may be set as default disapproval, which are not limited herein. Exemplarily, in a resource allocation application scenario, results of node voting may influence the allocation of assets or rewards. Therefore, consensus node voting weight allocation may also be configured for determining an allocation mode of resources, so as to ensure that participating nodes receive appropriate returns based on their contributions or benefits. Correspondingly, after a corresponding number of shadow nodes are configured for the service node of the service party according to the voting power required by the service party, in all embodiments of the present disclosure, corresponding default-operation information is configured for each shadow node to alleviate the problem that the shadow node cannot perform relevant node consensus processing in the case of not receiving the instruction transmitted by the service node of the service party.

By configuring corresponding default content of proposal, prevote, and precommit stages for each shadow node, the shadow node can take a corresponding processing action according to the corresponding default content in each stage of node consensus in a case that the shadow node does not receive the instruction from the service node of the service party, thus completing the entire node consensus process and ensuring that other nodes cannot perceive that the node is a shadow node.

S430: Configure a timeout period of the shadow node for waiting the instruction.

In all embodiments of the present disclosure, timeout may refer to that the shadow node's waiting exceeds a certain time and thus the shadow node is determined to fail in receiving a message, or the shadow node does not receive a corresponding message. The timeout period refers to a period, of which the elapse indicates that the timeout occurs at the shadow node in any stage of node consensus. In all embodiments of the present disclosure, the timeout period is configured for each shadow node, so that the shadow nodes can perform a processing action preconfigured in the default-operation information after the timeout. Exemplarily, as shown in FIG. 6 and FIG. 7, in a scenario of initial settings configuration of a shadow node, the timeout period configured may include a timeout period for triggering a proposal, a timeout period for triggering prevote, and a timeout period for triggering precommit. Relevant timeout information is configured for each shadow node, so that the shadow node can take a corresponding processing action in time according to the preconfigured default-operation information in the case of not receiving the instruction transmitted by the service node of the service party within the specified time, i.e., within the timeout period, thus effectively improving the operation efficiency of the blockchain network.

Based on the introduction of the method for constructing the group of nodes described above, an embodiment of the present disclosure further provides a method for processing block data for a blockchain network. The blockchain network includes a plurality of nodes. The method is configured for configuring a shadow node for a service node. The method includes: determining a service node belonging to a service party from the plurality of nodes of the blockchain network; calculating a quantity of shadow nodes to be configured for the service node of the service party according to a voting weight required by the service party on the service node and a quantity of nodes in the blockchain network; and configuring at least one shadow node for the service node according to the quantity of shadow nodes, where the service node stores a block ledger for processing the block data, processing performed by the at least one shadow node on the block data is consistent with processing performed by the service node on the block data, and the at least one shadow node does not store the block ledger locally..

When the required voting power in S310 is the voting weight required by the service node on the service party, the above steps may be regarded as a specific implementation of S310.

In all embodiments of the present disclosure, a manner for configuring the at least one shadow node for the service node according to the quantity of shadow node may include: configuring node mapping information between the shadow node and the service node, where the node mapping information indicates the shadow node is for the service node; configuring default-operation information of the shadow node, where the default-operation information indicates an action which the shadow node performs when not receiving an instruction transmitted by the service node; and configuring a timeout period of the shadow node for waiting the instruction. Details may refer to S410 to S430 and would not be repeated herein.

In all embodiments of the present disclosure, a blockchain network is constructed in a specific service scenario. This blockchain network includes a plurality of nodes, including service nodes of service parties with high importance. According to some specific service scenario requirements, the service node of the service party needs to obtain a higher voting weight. Therefore, in all embodiments of the present disclosure, the number of shadow nodes to be configured may be calculated according to the voting weight expected by the service node of the service party, and then shadow nodes are configured for the service node of the service party. Exemplarily, for a blockchain network with three nodes, assuming that a certain participant (i.e., the service node of the service party) wishes to occupy a voting weight of 50%, it only needs to deploy one shadow node. In this case, the entire blockchain network contains four nodes with voting rights, and the combination of the service node of the service party and the shadow node results in a voting weight of 50%, thus reaching the voting weight expected by the service node of the service party. To sum up, in all embodiments of the present disclosure, the shadow node does not need to store the relevant ledger data of the blockchain network, and can perform processing consistent with that of the service node of the service party or default processing, thus reducing the amount of resources occupied by a service party with a high voting power, and improving the operation efficiency of the blockchain network.

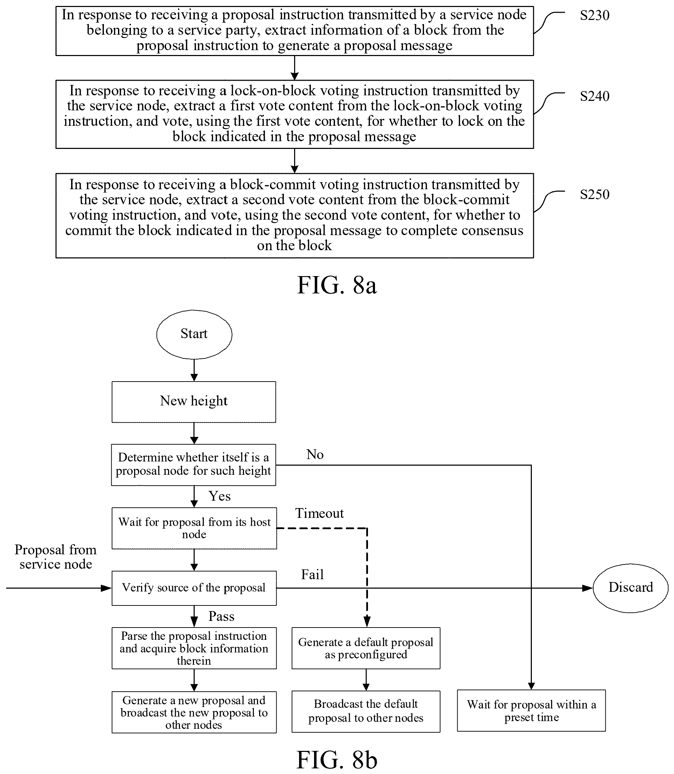

After the group of nodes of the service party is constructed based on the above method, when it is required to perform processing on block data, block data processing may be performed based on the constructed group of nodes of the service party. This method for processing block data may be executed by a shadow node. The shadow node may be an electronic device, such as a server or a terminal, which is not limited in all embodiments of the present disclosure. Referring to FIG. 8a, the method includes the following operations to implement the consistent processing between the shadow node and the corresponding service node.

S230: In response to receiving a proposal instruction transmitted by a service node belonging to a service party, extract information of a block from the proposal instruction to generate a proposal message.

The proposal message is configured to trigger each node in a blockchain network to vote for whether to lock on the block, the service node and the shadow node are in a group of nodes for the service party, the group of nodes is constructed through any manner described in the foregoing embodiments.

In all embodiments of the present disclosure, the proposal instruction comprises content of a proposal raised by a relevant node (e.g., the service node) for consensus among all nodes, and the node raising the proposal would wait for voting on such proposal among all nodes. In all embodiments of the present disclosure, the proposal message of the shadow node in the group of nodes may origin the service node of the service party, i.e., the shadow node firstly acquires the corresponding proposal instruction from the service node of the service party before initiating the proposal, so as to keep its action in processing consistent with the action of the service node of the service party. The shadow node may receive proposal instruction transmitted by the service node of the service party in real time within a preset waiting period. This proposal instruction may directly transmit an instruction to the shadow node to require it to perform corresponding proposal processing, i.e., the proposal processing performed by the shadow node can be kept consistent with the action of the service node of the service party. In addition, when performing the corresponding proposal processing, the shadow node does not need to perform corresponding calculation based on the block ledger stored in its own node like other ordinary nodes to obtain an operation result of the proposal processing. Therefore, in all embodiments of the present disclosure, the shadow node can help the service node of the service party to increase the voting weight.

In all embodiments of the present disclosure, the information of the block refers to all transaction records, a block header, and other related information contained in a block. When a relevant node proposes a new block, other nodes need to verify its validity based on the information of the block and vote to decide whether to accept this block. In all embodiments of the present disclosure, the proposal stage refers to a process in which a relevant consensus node proposes a proposal in a blockchain network and notifies other nodes to discuss and vote. Correspondingly, the proposal message may refer to a message indicating that a relevant consensus node proposes, for example, a new rule, a new protocol, or a new improvement plan, and notifies other nodes to discuss and vote for such proposal, such that the nodes can decide whether to accept the proposal. In all embodiments of the present disclosure, the shadow node extracts corresponding information of the block from the proposal instruction transmitted by the service node of the service party, performs proposal processing, generates a relevant proposal message, and transmits to each node, thus triggering each node to vote for whether to lock on the block indicated in the proposal (hereinafter called lock-on-block processing). The lock-on-block processing refers to a following process: when a node receives prevote messages for a block at a specific height and of a specific round and a quantity of the prevote messages favoring the proposal exceeds a certain proportion

(e.g., 2/3) of the total quantity of nodes, the node is locked on such block, i.e., the node indicates its approval on such block through locking itself on such block for such round. Exemplarily, taking a digital financial asset transaction validity verification scenario as an example, when a target object initiates a digital financial asset transaction, it is required to verify the validity of the digital financial asset transaction. In all embodiments of the present disclosure, proposal instruction is firstly transmitted to a corresponding shadow node through a service node of a corresponding group of nodes. Then, the corresponding shadow node extracts, in response to the proposal instruction, relevant information of the block from the proposal instruction, and performs relevant proposal processing to obtain a proposal message. Next, the shadow node transmits the generated proposal message to each node, so that each node performs voting on the digital financial asset transaction to determine whether the digital financial asset transaction is valid, i.e., each node is triggered to perform the lock-on-block processing.

S240: In response to receiving a lock-on-block voting instruction transmitted by the service node, extract a first vote content from the lock-on-block voting instruction, and vote, using the first vote content, for whether to lock on the block indicated in the proposal message.

In all embodiments of the present disclosure, the lock-on-block voting instruction may refer to a message issued by the service node of the service party in the blockchain network when the service node voting for whether to lock on a certain block. Locking on the block indicates that the block is confirmed as valid by the nodes and cannot be modified or deleted anymore. In all embodiments of the present disclosure, the first vote content may refer to a decision on whether to to lock on a certain block, which is extracted from the message transmitted by the service node of the service party. For example, the first vote content may indicate that block is valid or invalid. Exemplarily, taking a blockchain election application scenario as an example, in a blockchain voting election process, different voting weights need to be allocated to different voters to ensure the fairness and effectiveness of voting. For example, voting weights are allocated based on the identities and rights of different service parties to ensure the fairness and transparency of election. Therefore, in all embodiments of the present disclosure, a group of nodes is firstly constructed according to a required voting power of a corresponding election voting object. Then, in a case that the group of nodes receives proposal messages initiated by other nodes, a service node of the service party in the group of nodes transmits lock-on-block voting instruction to a shadow node, the shadow node extracts voting message for a certain elected object according to the lock-on-block voting instruction, i.e., first vote content, so as to perform corresponding lock-on-block processing on the received proposal message according to the first vote content, so that the action in processing of the shadow node is consistent with the action of the service node of the service party, thus increasing the voting weight of the service node of the service party, i.e., increasing the voting influence of the corresponding election voting object.

S250: In response to receiving a block-commit voting instruction transmitted by the service node, extracting a second vote content from the block-commit voting instruction, and voting, using the second vote content, for whether to commit the block indicated in the proposal message to complete consensus on the block.

The second vote content may indicate a voting result of each service node on whether to lock on the block,

In all embodiments of the present disclosure, the block-commit voting instruction may comprise a message transmitted from a relevant node (e.g., the service node) when voting for committing a block. In the blockchain, in order to ensure the validity and consistency of each block, consensus nodes need to vote for whether to commit a certain block on which the nodes have been locked on, so as to determine whether this block can be finally confirmed as a valid block. Correspondingly, the voting message of the consensus nodes will be recorded on the blockchain, so that other nodes can verify the validity and consistency of the block. In all embodiments of the present disclosure, the second vote content may include a voting result of each service node on whether to lock on the block. In all embodiments of the present disclosure, a block-commit voting message (i.e., the message for voting for whether to commit the block) issued by the shadow node may extracted from a block-commit voting message transmitted by the service node of the service party, and the shadow nodes participates in the consensus on information of the block according to the extracted result of the lock-on-block processing result of each node. Thus, the voting behavior of the shadow node is kept consistent with that of the service node of the service party. Exemplarily, taking a blockchain shared state application scenario as an example, in a case that changes occur in protocols or rules related to the blockchain, nodes may decide whether to accept these changes by voting and update the state of the blockchain. In a case that the relevant service party receives a protocol modification proposal from a certain node, the service party transmits block-commit voting instruction to the shadow node through the service node of the service party in the group of nodes, so as to instruct the shadow node to perform relevant block voting processing. In all embodiments of the present disclosure, the block-commit voting message of the service node of the service party may be generated according to the voting result of the lock-on-block processing of each node. Correspondingly, the shadow node extracts the block locking result of each node according to the received block voting message to perform block commitment processing, thus keeping the action in processing of the shadow node on the relevant proposal consistent with that of the service node of the service party to complete consensus on information of the block.

In order to ensure that the shadow node can perform proposal processing and achieve a complete node consensus process without storing relevant ledger data in the blockchain network, in all embodiments of the present disclosure, the operation of in response to receiving the proposal instruction transmitted by the service node belonging to the service party, extracting the information of the block from the proposal instruction to generate the proposal message may include, but not limited to, S510 to S520:
S510: Monitor, within a preset waiting period after the shadow node becomes a proposal node, whether the proposal instruction is received from the service node.

In all embodiments of the present disclosure, the proposal node, also known as a proposer, may refer to a node that proposes setting a certain value in the blockchain, where the behavior of setting a value is called a proposal, for example, a node that proposes a new transaction or a new block. The proposal node needs to obtain votes from other nodes in order to make the proposal valid. In all embodiments of the present disclosure, the preset waiting time may refer to the aforementioned timeout period of the shadow node, i.e., in a case that the proposal instruction of the service node of the service party is not received within the preset waiting time, the timeout is determined occur. Specifically, in a case that a shadow node needs to initiate a proposal, i.e., the shadow node becomes a current proposal node, since the shadow node does not store relevant block ledger in the blockchain network, it needs to receive proposal instruction from the corresponding service node of the service party to generate a corresponding proposal message. At the same time, in order to alleviate the problem that the proposal process cannot be completed since the proposal instruction from the service node of the service party is not received, in all embodiments of the present disclosure, a corresponding preset waiting time may be set, and the shadow node monitors the proposal instruction of the service node of the service party in real time within the preset waiting period. In a case that the proposal instruction of the service node of the service party cannot be received within the preset waiting period, the shadow node will perform a corresponding timeout operation.

Exemplarily, in a blockchain project application scenario, different nodes may have different interests and perspectives. In order to achieve blockchain governance and decision making, in all embodiments of the present disclosure, corresponding group of nodes are constructed according to the required voting powers of different service parties, so as to achieve governance and decision making by means of consensus node voting weight allocation. Correspondingly, in a case that the shadow node in the group of nodes become a proposal node, since it cannot generate corresponding proposal instruction on its own because it does not store relevant block ledger, in all embodiments of the present disclosure, the service node of the service party associated with the shadow node generates the corresponding proposal instruction and transmits it to the corresponding shadow node. At the same time, the shadow node receives the proposal instruction of the service node of the service party in real time within the preset waiting period, so as to perform subsequent proposal operation according to the received proposal instruction, thus achieving the complete proposal process and making other nodes unable to perceive that it is a shadow node.

S520: In response to receiving the proposal instruction from the service node within the preset waiting period, extract the information of the block from the proposal instruction, and generate a secondary proposal for the shadow node using the information of the block, wherein the proposal message carries the secondary proposal.

In all embodiments of the present disclosure, the secondary proposal may refer to a proposal made by the shadow node, where the shadow node constructs content of the secondary proposal using the content in the proposal instruction of the service node of the service party, so as to package the proposal of the service node of the service party into a new proposal, i.e., the secondary proposal of the shadow node. In all embodiments of the present disclosure, in a case that the shadow node receives the proposal instruction of the service node of the service party within the preset waiting period, relevant information of the block may be extracted from the proposal instruction, and the information of the block is converted to obtain proposal content of the shadow node, i.e., the secondary proposal. Next, the shadow node generates a corresponding proposal message according to the secondary proposal obtained through synthesis. Exemplarily, in a blockchain node consensus application scenario, in a case that a shadow node of a certain service party becomes a proposal node, a service node of the service party associated with the shadow node perceives that its corresponding shadow node is a current proposal node, and the service node of the service party generates corresponding proposal instruction and transmits it to the shadow node i.e., the current proposal node. In a case that the shadow node receives the proposal instruction within the preset waiting period, it extracts relevant information of the block from the proposal instruction, such as all transaction records, block headers, and other related information in the block. Next, in all embodiments of the present disclosure, the extracted information of the block is converted to obtain a secondary proposal, and a corresponding proposal message is generated.

After the proposal message is obtained, the proposal message may be broadcast to each node. In all embodiments of the present disclosure, broadcasting refers to broadcast communication, through which data are transmitted in a broadcast network and all network nodes can receive relevant data information. In all embodiments of the present disclosure, the proposal message is transmitted to each node in the blockchain network through broadcasting, so that other nodes can verify, accept or refuse the proposal. For example, after the shadow node generates the corresponding secondary proposal according to the proposal instruction of the service node of the service party, a proposal message is obtained, and the shadow node broadcasts the proposal message, so that each node can receive the proposal message, thus completing the proposal process of the shadow node. In all embodiments of the present disclosure, by generating the proposal instruction through the shadow node associated with the service node of the service party, the shadow nodes can complete the node consensus proposal function without storing ledger data, thus not only reducing the amount of resources occupied, but also increasing the voting weight of the service party, and effectively improving the operation efficiency of the blockchain network.

In order to alleviate the problem that the shadow node cannot complete proposal since the shadow node cannot receive the proposal instruction of the service node of the service party in time, in all embodiments of the present disclosure, the method for processing block data according to the embodiment of the present disclosure may further include S610:
S610: In response to not receiving the proposal instruction from the service node within the preset waiting period, generate a default proposal configured for the shadow node, wherein the proposal message carries the default proposal.

In all embodiments of the present disclosure, the default proposal may be configured when initializing the shadow node after the shadow node has been constructed. That is, the aforementioned default-operation information may include default content for performing the proposal after timeout. In all embodiments of the present disclosure, the preset waiting time may be a timeout period for triggering the default proposal. Specifically, in a case that the shadow node as a proposal node does not receive proposal instruction of its associated service node within the preset waiting period, in all embodiments of the present disclosure, it is considered that a timeout occurs in receiving the proposal instruction. In this case, the shadow node performs a corresponding timeout operation, generates a default proposal message according to the default configuration information preconfigured in the shadow node, and broadcasts it to each node to complete the proposal function. Exemplarily, taking a digital financial asset application scenario as an example, in a digital financial asset transaction process, it is required to verify the validity and legality of the transaction. Therefore, for some service parties with higher reliability, they require higher voting power, i.e., higher voting weight. In all embodiments of the present disclosure, according to a relevant required voting power, a group of nodes including a corresponding number of shadow nodes and a service node of a service party is constructed. In a case that a certain shadow node becomes a proposal node, it is required to receive proposal instruction of the service node of the service party to construct a corresponding secondary proposal and generate a proposal message. In a case that the shadow node does not receive the proposal instruction of the service node of the service party within the preset waiting period, i.e., a timeout occurs in receiving the proposal instruction, in order to respond to the proposal in time, the shadow node generates a default proposal message according to its default configuration information and broadcasts it to each node in the blockchain network, thus alleviating the problem that the shadow node cannot complete proposal since the shadow node cannot receive the proposal instruction of the service node of the service party.

Exemplarily, referring to FIG. 8b, FIG. 8b is a flowchart of a proposal stage of a shadow node according to an embodiment of the present disclosure. After entering a block consensus process at a new height, in all embodiments of the present disclosure, the shadow node determines whether it is a proposal node at that height. In all embodiments of the present disclosure, height refers to the height of blocks in the blockchain network, i.e., the number of blocks in the blockchain. Correspondingly, since each block contains a hash value of a previous block, the block height may also be understood as the chain length in the blockchain. In addition, in a consensus algorithm of the blockchain, each node needs to verify the validity of a new block by verifying the transaction and hash value in the block and add it to the blockchain. Therefore, height also represents the synchronization state in the blockchain network, since each node is to have the same block height. In a case that it is determined that it is not a proposal node at that height, the shadow node waits for proposal instruction of other nodes within certain time. In a case that it is determined that the shadow node itself is a proposal node at that height, the shadow node waits for the corresponding service node of the service party to transmit proposal instruction to it. At the same time, in a case that the service node of the service party determines that its corresponding shadow node is a proposal node, it generates corresponding proposal instruction and transmits it to the shadow node to instruct the shadow node to perform proposal processing. After the shadow node receives the proposal instruction of the service node of the service party, it firstly verifies the source of the proposal instruction to determine that it is proposal instruction from the associated service node of the service party. Next, after verification passes, i.e., it is determined that the proposal instruction comes from the associated service node of the service party, the shadow node parses the proposal instruction to acquire the information of the block therein, generates new proposal instruction, i.e., a proposal message, and broadcasts it to each node in the blockchain network. Correspondingly, in a case that it is determined that the proposal instruction does not come from the associated service node of the service party, the proposal instruction is discarded. In addition, in a case that the shadow node does not receive the proposal instruction of the service node of the service party within the preset waiting period, i.e., a timeout occurs in receiving the proposal instruction of the service node of the service party, the shadow node generates default proposal instruction, i.e., a proposal message, according to the preconfigured default configuration information, and broadcasts it to each node.

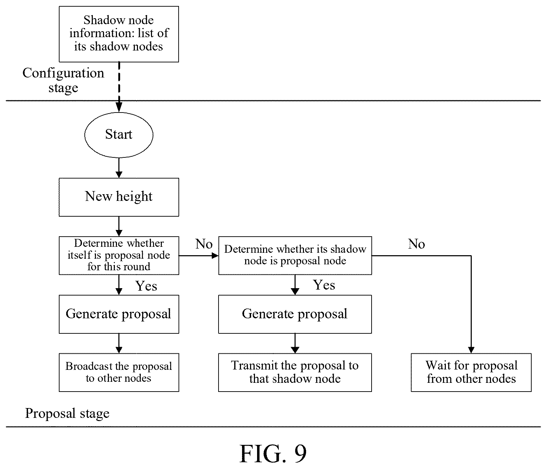

Correspondingly, referring to FIG. 9, FIG. 9 is a flowchart of a proposal stage of a service node of a service party according to an embodiment of the present disclosure. Firstly, in all embodiments of the present disclosure, before entering the proposal stage, a service node of a service party is firstly configured. For example, when constructing a group of nodes, the service node of the service party is configured accordingly, and list information of shadow nodes associated with it, i.e., a shadow node list, is constructed, so as to associate the service node of the service party with the corresponding shadow nodes. Next, after the consensus process reaches a new height, the service node of the service party first determines whether it is a proposal node for that round. In a case that it is determined that it is a proposal node for that round, it generates a corresponding proposal and broadcasts it to other nodes. In a case that it is determined that it is not a proposal node, the service node of the service party further determines whether the shadow node associated with it is a proposal node according to the shadow node list. In a case that it is determined that the shadow node associated with it is a current proposal node, a corresponding proposal (i.e., in the proposal instruction) is generated and transmitted to the corresponding shadow node, so as to guide the shadow node to propose. On the contrary, in a case that it is determined that the shadow node associated with it is not a proposal node, the service node of the service party waits for other nodes in the blockchain network to transmit proposals.

In order to keep its action in processing of the shadow node consistent with that of the service node of the service party and achieve lock-on-block processing, in all embodiments of the present disclosure, the operation of in response to receiving the lock-on-block voting instruction transmitted by the service node, extracting the first vote content from the lock-on-block voting instruction, and voting, using the first vote content, for whether to lock on the block indicated in the proposal message may include, but is not limited to, S710 to S730:
S710: Monitor, within a preset waiting period after the shadow node as the proposal node broadcasts the proposal message to each node in the blockchain network, whether the lock-on-block voting instruction is received from the service node.

In all embodiments of the present disclosure, the preset waiting period may refer to a timeout period for triggering the prevote. In all embodiments of the present disclosure, the prevote message of the shadow node is generated through receiving the block voting message of the service node of the service party. Specifically, in a case that the shadow node as a proposal node broadcasts the corresponding proposal message to each node, the shadow node monitors the lock-on-block voting instruction of the service node of the service party in real time within the preset waiting period. That is, the shadow node acquires the lock-on-block voting instruction of the proposal from the associated service node of the service party, so as to keep its action in processing consistent with the action of the service node of the service party. Exemplarily, in a network security application scenario, nodes corresponding to some service parties may have more voting weight to improve network security. Correspondingly, the service party constructs a group of nodes according to a corresponding required voting power and then performs a relevant node consensus process through the group of nodes. In a case that a shadow node in the group of nodes becomes a proposal node, the service node of the service party transmits an instruction to the shadow node, so that the shadow node can generate a relevant proposal message and broadcast it to each node. Further, after broadcasting the proposal message, the shadow node waits for voting message, i.e., lock-on-block voting instruction, of the service node of the service party. At the same time, in all embodiments of the present disclosure, the shadow node only receives the lock-on-block voting instruction of the service node of the service party within the preset waiting period. In a case that the waiting time exceeds the preset waiting time, it performs corresponding timeout processing.

S720: In response to receiving the lock-on-block voting instruction from the service node within the preset waiting period, extract the first vote content from the lock-on-block voting instruction, determine a first vote of the shadow node using the first vote content, and generate a first voting message indicating the first vote.

In all embodiments of the present disclosure, the first voting message is a voting message generated by the shadow node with respect to the relevant proposal. In all embodiments of the present disclosure, the first voting message of the shadow node is generated according to the first vote content extracted from the lock-on-block voting instruction of the service node of the service party, so that the shadow node can follow the voting of the service node of the service party, thus increasing the voting weight of the service node of the service party. Specifically, in a case that the shadow node receives the lock-on-block voting instruction of the service node of the service party, in all embodiments of the present disclosure, the vote content, i.e., first vote content of the service node of the service party may be extracted from the lock-on-block voting instruction. Then, the shadow node converts the extracted first vote content to construct its own voting message, i.e., the first voting message.

Exemplarily, taking a digital collectible transaction application scenario as an example, in a digital collectible transaction process, consensus verification needs to be performed on the validity of relevant transaction behavior. For some service party nodes with larger rights or higher reliability, they have higher voting power, i.e., higher voting weight, in the voting verification process. Therefore, in all embodiments of the present disclosure, a corresponding group of nodes is configured, so that the corresponding service party occupies a corresponding voting weight. Correspondingly, in a case that the shadow node in the group of nodes becomes a proposal node and completes the broadcasting of the corresponding proposal message, the shadow node receives lock-on-block voting instruction of the service node of the service party in real time within the preset waiting period. In a case that the shadow node receives the corresponding lock-on-block voting instruction within the preset waiting period, in all embodiments of the present disclosure, the voting message of the service node of the service party, such as relevant verification voting message, vote count information, signature information and voting round, may be extracted from the lock-on-block voting instruction. Further, in all embodiments of the present disclosure, first voting message corresponding to the shadow node is converted by combining the extracted first vote content with the relevant information of the shadow node, thus generating a first voting message.

S730: Broadcast the first voting message to each node in the blockchain network.

The first voting message is a voting message generated by the shadow node according to the lock-on-block voting instruction of the service node of the service party. In all embodiments of the present disclosure, the voting message of the shadow node, i.e., the first voting message, may be generated based on the relevant voting message extracted from the lock-on-block voting instruction of the service node of the service party. Then, the shadow node broadcasts the first voting message to each node in the blockchain network. For example, in a case that the shadow node generates its own voting message according to the instruction of the service node of the service party, the shadow node broadcasts the voting message, so that each node can receive the voting message of the shadow node to complete the prevote stage. Since the voting message of the shadow node is generated based on the lock-on-block voting instruction of its associated service node of the service party, the voting result of the shadow node is kept consistent with that of the service node of the service party, thus increasing the voting weight of the service node of the service party.

In order to alleviate the problem that the shadow node cannot complete the prevote stage since the shadow node cannot receive the lock-on-block voting instruction of the service node of the service party in time, in all embodiments of the present disclosure, the method for processing block data according to the embodiment of the present disclosure may further include S810:
S810: In response to not receiving the lock-on-block voting instruction from the service node within the preset waiting period, generate a second voting message which is a default configured for the shadow node, and broadcast the second voting message to each node in the blockchain network.

In all embodiments of the present disclosure, the second voting message may be a default content for the prevote stage and may be preconfigured in the shadow node. For example, in the initialization configuration process of the shadow node, the default content for the prevote stage is configured, so that in a case that the shadow node does not receive the lock-on-block voting instruction of the service node of the service party within the preset waiting period, it can complete voting according to the default configuration information. Specifically, in all embodiments of the present disclosure, the preset waiting period may be a timeout period for triggering the prevote, i.e., a timeout period for receiving the lock-on-block voting instruction of the service node of the service party. In a case that the shadow node does not receive the lock-on-block voting instruction of the service node of the service party within the preset waiting period, the shadow node generates a corresponding second voting message according to its preconfigured default content for the prevote stage and broadcasts it to each node, thus completing the prevote stage, effectively alleviating the problem that the shadow node cannot complete the prevote stage since the shadow node cannot receive the lock-on-block voting instruction, and improving the operation efficiency of the blockchain network.

Exemplarily, taking a game virtual resource allocation application scenario as an example, in some game application scenarios, a game target object needs to allocate its game resources, and a node voting result may influence the allocation of game resources or game rewards (such as game coins and game props). Therefore, it is required to allocate the voting weights of game target objects with different rights and interests, so as to ensure that nodes participating in consensus receive appropriate rewards according to their contributions or benefits. Correspondingly, in all embodiments of the present disclosure, corresponding group of nodes may be configured according to voting weight requirements of different service parties. In a case that the shadow node in the relevant group of nodes needs to perform voting, it firstly acquires the lock-on-block voting instruction of the service node of the service party within the preset waiting period to generate a corresponding voting message. In a case that the shadow node does not receive the corresponding lock-on-block voting instruction within the preset waiting period, i.e., a timeout occurs in receiving the lock-on-block voting instruction, the shadow node generates a corresponding second voting message, i.e., a default voting message, according to the preconfigured default configuration information, and broadcasts the second voting message to each node to complete the prevote process.

In order to further keep its action in processing of the shadow node consistent with that of the service node of the service party and increase the voting weight of the service node of the service party, in all embodiments of the present disclosure, the operation of in response to receiving the lock-on-block voting instruction transmitted by the service node, extracting the first vote content from the lock-on-block voting instruction, and voting, using the first vote content, for whether to lock on the block indicated in the proposal message may further include, but is not limited to, S910 to S920:
S910: Monitoring, within a preset waiting period after the shadow node becomes not the proposal node, a proposal message from another node.

In all embodiments of the present disclosure, the other node may refer to a node in the blockchain network except for the shadow node. In a case that the shadow node is not a proposal node, it waits for other nodes in the blockchain network to propose within certain time, i.e., the preset waiting period. For example, after entering a new height, the shadow node first determines whether it is a proposal node at that height. In a case that it is determined that it is not a proposal node at that height, the shadow node enters a waiting state and waits for proposal instruction of other nodes in the blockchain network within the preset waiting period.

S920: In response to receiving a proposal message from the service node, generate a third voting message which is a default configured for the shadow node, and broadcast the third voting message to each node in the blockchain network.

Here the service node of the service party refers to the service node associated with the shadow node. In all embodiments of the present disclosure, the third voting message may be a default voting message configured when initializing the shadow node. In a case that the proposal node is the service node of the service party associated with the shadow node, in all embodiments of the present disclosure, corresponding voting message may generate according to the default vote content. Specifically, in a case that the shadow node receives the proposal message from the service node of the service party, the shadow node may first generate the corresponding default voting message, i.e., the third voting message, according to its default configuration, and broadcasts it to each node in the blockchain network, thus increasing the voting weight of the service node of the service party.

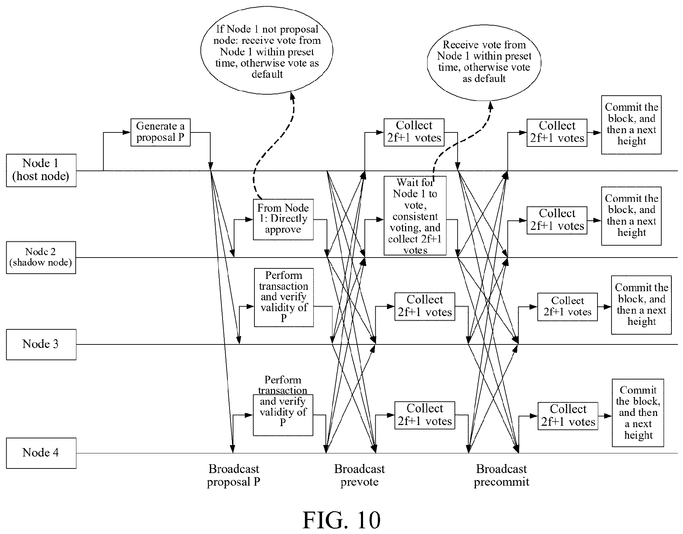

As shown in FIG. 10, FIG. 10 is a flowchart of consensus in a case that a service node of a service party is a proposal node in a current round in an environment with 4 nodes. In the figure, Node 2 and Node 1 form a group of nodes. Node 1 is a service node of a service party, and Node 2 is a shadow node associated with Node 1. Exemplarily, taking a blockchain shared state update application scenario as an example, in a case that changes occur in protocols or rules related to the blockchain, blockchain network nodes may decide whether to accept these changes by voting and update the state of the blockchain. Correspondingly, different blockchain network nodes may have different voting weights, and the number of shadow nodes in their group of nodes may also vary. In a case that the shadow node is not a proposal node, the shadow node only needs to receive proposal instruction of other nodes in the blockchain network. In a case that the shadow node receives the proposal message from the service node of the service party within the preset waiting period, the shadow node directly generates a default voting message according to the corresponding default configuration information and broadcasts it to each node in the blockchain network. The default configuration information has already been initialized and configured when constructing the target service node. Generating the third voting message through the shadow node according to the default configuration information can effectively improve the operation efficiency of the blockchain network.

In order to further keep its action in processing of the shadow node consistent with that of the service node of the service party and increase the voting weight of the service node of the service party, in all embodiments of the present disclosure, the operation of in response to receiving the lock-on-block voting instruction transmitted by the service node, extracting the first vote content from the lock-on-block voting instruction, and voting, using the first vote content, for whether to lock on the block indicated in the proposal message may further include, but is not limited to, S1010 to S1020:
S1010: in response to receiving a proposal message not from the service node, monitor, within a preset waiting period after receiving the proposal message not from the service node, whether the lock-on-block voting instruction is received from the service node of the service party.

In all embodiments of the present disclosure, the preset waiting period may be a timeout period for triggering the prevote and may be configured when initializing the shadow node, and the shadow node monitors the lock-on-block voting instruction within the timeout period for triggering the provote. Specifically, after block consensus enters a new height, the shadow node first determines whether it is a proposal node at that height. In a case that it is determined that it is not a proposal node, the shadow node waits for proposal message of other nodes within certain time. Next, after receiving the proposal message, the shadow node analyzes the source of the proposal instruction. In a case that it is determined that the proposal message does not come from the service node of the service party, the prevote of the shadow node needs to be performed according to the instruction of the service node of the service party. In this case, the shadow node receives the lock-on-block voting instruction of the service node of the service party in real time within the preset waiting period. Exemplarily, taking a digital financial asset transaction application scenario as an example, in a case that the shadow node of a relevant digital financial asset target object receives a proposal message from any other digital financial asset object in the blockchain network, i.e., the proposal message is not a proposal message from the service node of the service party corresponding to the shadow node, the shadow node needs to acquire the lock-on-block voting instruction of the service node of the service party to generate corresponding voting message, so as to keep its action in processing consistent with that of the service node of the service party. Correspondingly, the shadow node acquires the lock-on-block voting instruction of the service node of the service party within the timeout period for triggering the prevote, i.e., the preset waiting period. In a case that the shadow node does not receive relevant instruction information from the service node of the service party within the preset waiting period, it will perform corresponding timeout processing according to the default configuration information.

S1020: In response to receiving the lock-on-block voting instruction from the service node within the preset waiting time, generate a fourth voting message and broadcasting the fourth voting message to each node in the blockchain network.

The fourth voting message may be a voting message generated by the shadow node for a relevant proposal according to the lock-on-block voting instruction. In all embodiments of the present disclosure, the voting message of the shadow node is generated according to the vote content extracted from the lock-on-block voting instruction of the service node of the service party, so that the shadow node can follow the voting of the service node of the service party, thus increasing the voting weight of the service node of the service party. Specifically, in all embodiments of the present disclosure, in a case that the shadow node receives the lock-on-block voting instruction of the service node of the service party within the preset waiting time, the vote content of the service node of the service party may be extracted from the lock-on-block voting instruction. Then, the shadow node converts the voting content of the service node of the service party to obtain a voting message, i.e., the fourth voting message, of the shadow node. Then, the shadow node broadcasts the fourth voting message to each node in the blockchain network to complete the prevote. Exemplarily, taking a blockchain decision management application scenario as an example, in some decentralized autonomous organizations or blockchain projects, nodes of different service parties may have different interests and perspectives. By allocating different voting powers to different service parties, it can ensure that nodes participating in consensus have different influences in the decision-making process. Correspondingly, when shadow nodes of service parties with different voting powers perform the provote, in a case that the proposal message received by the shadow node does not come from the service node of the service party, it needs to receive lock-on-block voting instruction from the service node of the service party within preset waiting time to generate a corresponding voting message. After the shadow node acquires the lock-on-block voting instruction of its associated service node of the service party within the preset waiting time, the shadow node extracts corresponding vote content according to the lock-on-block voting instruction, generates a corresponding fourth voting message, and broadcasts the fourth voting message to each node in the blockchain network to perform voting. In addition, the fourth voting message is generated according to an instruction of the service node of the service party, so that the voting action in processing of the shadow node is kept consistent with that of the service node of the service party, thus effectively improving the influence of the voting of the corresponding service party.

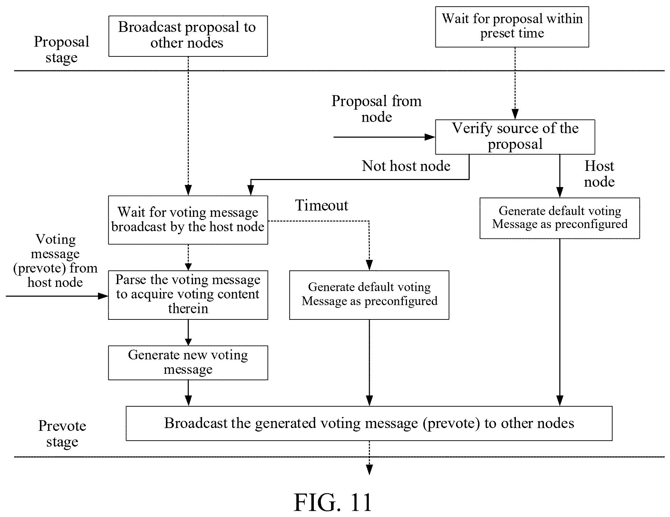

Exemplarily, referring to FIG. 11, FIG. 11 is a flowchart of a consensus processing and the prevote stage of a shadow node according to an embodiment of the present disclosure. In all embodiments of the present disclosure, after broadcasting the corresponding proposal message to other nodes, the shadow node waits for a voting message, i.e., lock-on-block voting instruction, broadcast by the service node of the service party. After receiving the proposal message broadcast by the shadow node, the service node of the service party generates the corresponding lock-on-block voting instruction and transmits it to the shadow node. After receiving the lock-on-block voting instruction of the service node of the service party, the shadow node parses the lock-on-block voting instruction to acquire the voting content in the instruction i.e., the first vote content, and generates a new voting message, i.e., the first voting message. Then, the shadow node broadcasts the voting message to other nodes in this round. In addition, when the shadow node does not receive the voting message, i.e., the lock-on-block voting instruction, from the service node of the service party within the preset waiting period, it determines that a timeout occurs. In this case, the shadow node generates a corresponding default prevote message, i.e., the second voting message, according to the preconfigured default configuration information, and broadcasts such message to each node in the blockchain network. In a case that the shadow node is not a proposal node at that height, the shadow node first waits for proposals of other nodes within a preset time. After the shadow node receives the proposal message transmitted by a relevant node, the shadow node first verifies the source of the received proposal message to determine whether the proposal comes from its associated service node. In a case that it is determined that the proposal comes from its associated service node, the shadow node directly generates a corresponding voting message, i.e., the third voting message, according to the preconfigured default configuration information, and broadcasts such message to each node. On the contrary, in a case that it is determined that the proposal does not come from its associated service node, the shadow node starts to wait for the prevote message, i.e., the lock-on-block voting instruction, transmitted by its associated service node, such that it can perform an action consistent with that of the service node according to the lock-on-block voting instruction.

In order to keep its action in processing of the shadow node consistent with that of the service node of the service party and achieve block commitment processing, in all embodiments of the present disclosure, the operation of in response to receiving the block-commit voting instruction transmitted by the service node, extracting the second vote content from the block-commit voting instruction, and voting, using the second vote content, for whether to commit the block indicated in the proposal message may include, but is not limited to, S1110 to S1140:
S1110: Acquire a voting message from another node for whether to lock on the block.

In all embodiments of the present disclosure, the voting message may come from each node in the blockchain network. After the proposal node initiates a corresponding proposal, each node in the blockchain network generates the corresponding voting message for indicating whether to lock on the block after receiving the proposal message, and then it broadcasts the voting message to each node. Specifically, in all embodiments of the present disclosure, after the shadow node broadcasts its voting message to each node, the shadow node may acquire the voting message broadcast by other nodes in the blockchain network. Exemplarily, in a blockchain voting application scenario, when a certain shadow node of a service party generates a voting message according to the voting message of the corresponding service node of the service party and broadcasts it to each node, the shadow node acquires the voting message broadcast by other nodes in the blockchain network, i.e., it collects the prevote messages of other nodes. In all embodiments of the present disclosure, locking on the block may be trigger only after a preset quantity of prevote messages are collected, for example, after a node receives approval votes of more than 2/3 of all nodes.

S1120: Monitor, within a preset waiting period after acquiring the voting message, whether the block-commit voting instruction is received from the service node.

In all embodiments of the present disclosure, the preset waiting period may refer to a timeout period for triggering the precommit, i.e., a timeout period for receiving the block-commit voting instruction of the service node of the service party. Specifically, in all embodiments of the present disclosure, the shadow node may monitor for the block-commit voting instruction broadcast by the service node of the service party within the preset waiting period after acquiring the voting message from another node for whether to lock on the block, so as to generate a corresponding voting message according to the block-commit voting instruction of the service node of the service party, and thus achieving block commitment processing and keeping the consistency with the action of the service node of the service party. Exemplarily, taking a network resource application scenario as an example, a network target object needs to allocate its network resources, and a result of node voting may influence the allocation of network resources. Therefore, it is necessary to allocate the voting weights of network target objects with different requirements to ensure that nodes participating in consensus receive appropriate resources according to their contributions or needs. Correspondingly, after the corresponding shadow node broadcasts the corresponding prevote message, i.e. the voting message of the prevote stage, to each node, it enters a precommit stage. The shadow node firstly acquires lock-on-block voting instruction of each node in the blockchain network. Then, the shadow node receives block-commit voting instruction of the service node of the service party in real time within a preset a timeout period range for triggering precommitment, i.e., the voting message committed for the block after there is a locked block in the service node of the service party. The block voting message committed by the shadow node is extracted from the block voting message transmitted by the service node of the service party, and consensus on information of the block is completed according to the extracted lock-on-block processing result of each node, so that the voting behavior of the shadow node is kept consistent with that of the service node of the service party.

S1130: In response to receiving the block-commit voting instruction from the service node within the preset waiting period, extract the second vote content from the block-commit voting instruction, obtain a second vote of the shadow node using the second vote content, and generate a fifth voting message indicating the second vote.

In all embodiments of the present disclosure, the second vote content may comprise a result of the lock-on-block processing of each node, i.e., a result of the lock-on-block processing of each node received by the service node of the service party. Specifically, in all embodiments of the present disclosure, in a case that the shadow node receives the block-commit voting instruction transmitted by the service node of the service party within the preset waiting period, the shadow node may parse the block voting message, so as to extract the corresponding vote content, i.e., the second vote content, generate new voting message according to the second vote content to obtain second voting message of the shadow node, and generate a corresponding fifth voting message. Exemplarily, taking a digital financial asset application scenario as an example, in all embodiments of the present disclosure, a corresponding group of nodes is constructed so that a corresponding digital financial asset service party has higher voting power, i.e., higher voting weight. Correspondingly, after the shadow node of the digital financial asset service party receives block voting message of the service node of the service party, i.e., precommitment information, within a preset a timeout period range for triggering precommitment, the shadow node parses the block voting message and extracts relevant vote content, such as the lock-on-block processing result of each node, so as to convert corresponding voting message, i.e., second voting message, of the shadow node according to the extracted vote content, and then generate a voting message of the shadow node. The voting message corresponds to the voting message of the service node of the service party, so as to also keep the consistency with the action of the service node of the service party during the block commitment stage.

S1140: Broadcast the fifth voting message to each node in the blockchain network.

In all embodiments of the present disclosure, the shadow node may generate a fifth voting message according to the block-commit voting instruction of the service node of the service party and broadcast the fifth voting message to each node to achieve block commitment processing. For example, in a blockchain consensus application scenario, after the shadow node broadcasts corresponding prevote message to each node in the blockchain network, it enters a precommit stage. In this case, the shadow node acquires block-commit voting instruction from the service node of the service party within the preset waiting period, so as to generate a fifth voting message according to the voting message committed by the service node of the service party. Further, after generating the corresponding fifth voting message according to the instruction of the service node of the service party, the shadow node broadcasts it to each node in the blockchain network to perform voting, thus achieving the block commitment function.

In order to alleviate the problem that the shadow node cannot complete precommitment since the shadow node cannot receive the block-commit voting instruction of the service node of the service party in time, in all embodiments of the present disclosure, the method for processing block data according to the embodiment of the present disclosure may further include S1210:
S1210: In response to not receiving the block-commit voting instruction from the service node within the preset waiting period, generate a sixth voting message which is a default configured for the shadow node, and broadcast the sixth voting message to each node in the blockchain network.

In all embodiments of the present disclosure, the sixth voting message may be configured as a default content for the precommitment stage. In all embodiments of the present disclosure, when the shadow node is initialized, the default content for the precommitment of the shadow node, i.e., the default message issued by the shadow node when a timeout occurs for monitoring the block-commit voting instruction of the service node of the service party, may be configured. Specifically, in all embodiments of the present disclosure, in a case that the shadow node does not receive the block-commit voting instruction of its associated service node of the service party within the preset waiting period, the shadow node may directly generate the corresponding sixth voting message according to the default configuration information and broadcast it. Exemplarily, taking a digital collectible application scenario as an example, in a case that a shadow node in a group of nodes of a corresponding digital collectible target object does not receive block-commit voting instruction transmitted by the corresponding service node of the service party within the preset waiting period, in order to complete precommitment in time, the shadow node directly generates a default voting message, i.e., a sixth voting message, according to the preconfigured default configuration information. Next, the shadow node broadcasts the default voting message to each node to complete the precommitment function, thus effectively alleviating the problem that the shadow node cannot complete precommitment since it cannot receive the block-commit voting instruction of the service node of the service party in time.

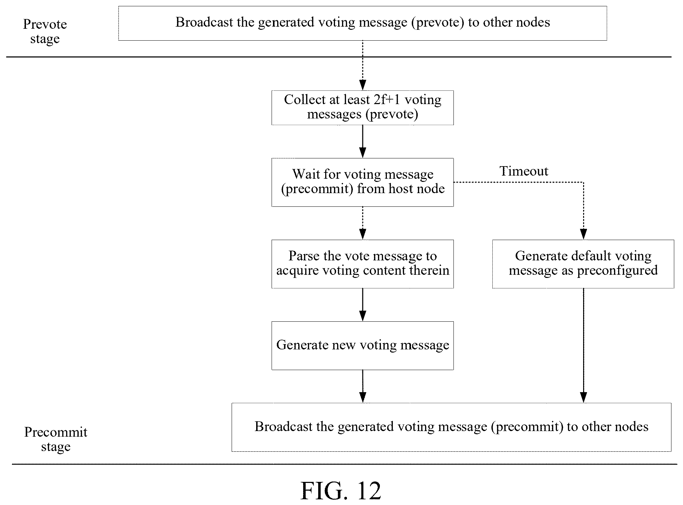

Exemplarily, referring to FIG. 12, FIG. 12 is a flowchart of consensus processing in the precommit stage of a shadow node according to an embodiment of the present disclosure. In all embodiments of the present disclosure, after broadcasting the corresponding voting message to each node, the shadow node acquires the voting messages, i.e., the prevote messages, of the other nodes. For a certain height and a certain round, in a case that a node receives the approving prevote messages of more than 2/3 of all nodes with respect to a certain block, the node is locked on the block for such height and such round. In other words, 2f+1 approving prevote messages need to be collected, where f is the number of abnormal nodes in the network, i.e., the number of malicious nodes. Next, the shadow node waits for a precommit voting message, i.e., the aforementioned block-commit voting instruction, broadcast by the service node of the service party. After receiving the block-commit voting instruction transmitted by the service node of the service party, the shadow node parses the block-commit voting instruction to acquire the corresponding vote content, i.e., the second vote content, generates a new precommit voting message, i.e., the fifth voting message, and broadcasts such message to other nodes. When the shadow node does not receive the precommit voting message, i.e., the block-commit voting instruction, of the service node of the service party within the preset waiting period, it determines that a timeout occurs. In this case, the shadow node may generates a default precommit voting message, i.e., the sixth voting message, according to the preconfigured default configuration information, and broadcast message to each node in the blockchain network.

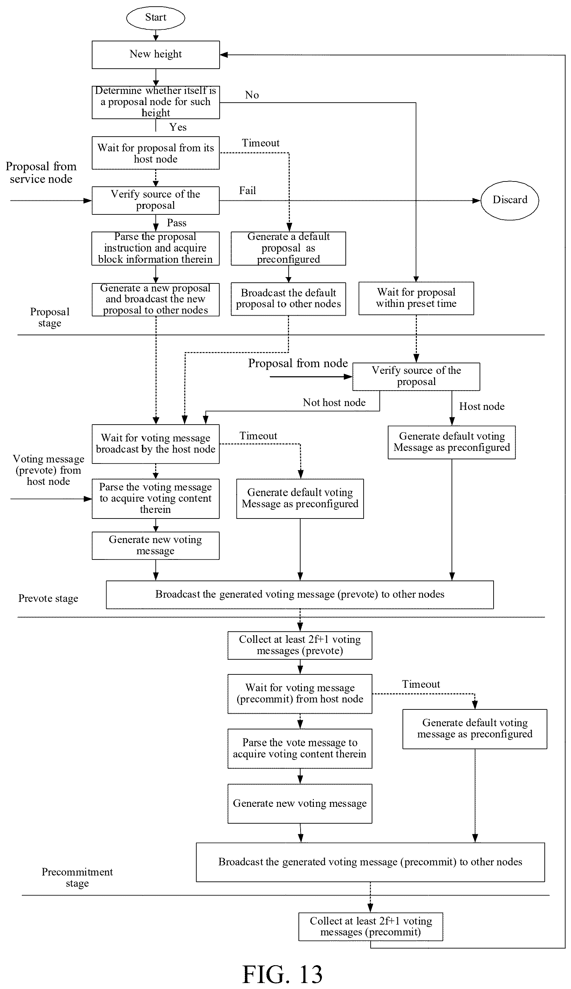

Exemplarily, taking a blockchain node consensus application scenario as an example, in this technical solution of the present disclosure, the complete implementation process of the method for processing block data is described as follows:
Referring to FIG. 13, FIG. 13 is a flowchart of overall consensus processing performed by a shadow node in a method for processing block data in a specific example. After a group of nodes including a service node of a service party and a corresponding number of shadow nodes are configured according to a voting power required by the service party, a corresponding node consensus process may be performed through the service node of the service party and the shadow nodes in the group of nodes. Specifically, after the blockchain enters a new height, a shadow node first determines whether it is a proposal node for such height. In a case that it is determined that it is the proposal node, the shadow node waits for a proposal instruction transmitted by the corresponding service node. Next, after receiving the related proposal instruction, the shadow node first verifies the source of the proposal instruction to determine whether it comes from the service node associated itself. After the verification successes, i.e., it is determined that the proposal instruction comes from the service node of the service party, it parses the proposal instruction to acquire the corresponding information of the block, generates a new proposal message based on the information of the block, and broadcasts the proposal message to other nodes in the blockchain network. On the contrary, in a case that it determines that the proposal instruction does not come from the service node, it determines that a reception error occurs, and the proposal instruction is discarded. In addition, in a case that the shadow node waits for the corresponding service node of the service party to transmit the proposal instruction but does not receive the proposal instruction within the preset waiting period, it determines that a timeout occurs. In this case, the shadow node generates a default proposal message according to the preconfigured default configuration information and broadcasts such message to each node in the blockchain network. Moreover, in a case that the shadow node determines that it is not the proposal node for that height, it enters a waiting stage and waits for a proposal message broadcast by other nodes within a preset time.

Next, after the shadow node broadcasts the corresponding proposal message to each other node, the shadow node enters a waiting stage and waits for a voting message, i.e., the lock-on-block voting instruction, broadcast by the corresponding service node. In addition, after receiving the lock-on-block voting instruction transmitted by the corresponding service node, the shadow node first parses the lock-on-block voting instruction to acquire a relevant voting message, i.e., the first vote content, and then generates a new voting message, i.e., the first voting message, according to the received voting message. Moreover, in a case that a timeout occurs when the shadow node waits for the lock-on-block voting instruction of the service node, i.e., it does not receive the relevant voting message of the service node of the service party within the preset waiting period, the shadow node generates a default prevote message, i.e., the second voting message, according to the default configuration information, and broadcasts such message to each node in the blockchain network. When that the shadow node is not a proposal node and receives the proposal instruction (proposal message) within certain time, the shadow node first verifies the source of the received proposal to confirm whether the proposal message comes from its associated service node. In a case that it is determined that the proposal message comes from the service node, the shadow node directly generates a default voting message, i.e., the third voting message, according to the preconfigured default configuration information, and broadcasts such message to other nodes. On the contrary, in a case that it is determined that the proposal node does not come from the service node, the shadow node starts to wait for a voting message, i.e., the lock-on-block voting instruction, broadcast by the corresponding service node, such that it can generate a corresponding voting message according to whether the service node of the service party votes for locking on the block, and broadcast such message to each node in the blockchain network.

After the shadow node broadcasts the generated voting message to each node, the shadow node first acquires the voting messages, i.e.,the prevote messages, of other nodes. For example, the shadow node needs to collect not less than 2f+1 approving voting messages. f refers to the number of malicious nodes allowed in the entire blockchain network, and exceeding this number will decrease the security of the entire network, or even make the entire network unusable. Then, the shadow node waits for a precommit message, i.e., the block-commit voting instruction, broadcast by its associated service node, and parses the block-commit voting instruction to acquire the voting content therein. Next, the shadow node generates a new voting message according to the parsed vote content, i.e., the second vote content, and broadcasts such message to other nodes in the blockchain network. When the shadow node does not receive the block-commit voting instruction of the service nodey within the preset waiting period, it determines that a timeout occurs. In this case, the shadow node generates a corresponding default voting message, i.e., the sixth voting message, according to the default configuration information configured during initialization and broadcasts such message to each node. Then, in a case that the node receives approving precommit messages of more than 2/3 among 2f+1 nodes for the block, it commits the block. Then, a consensus process for a block of a next height is entered.

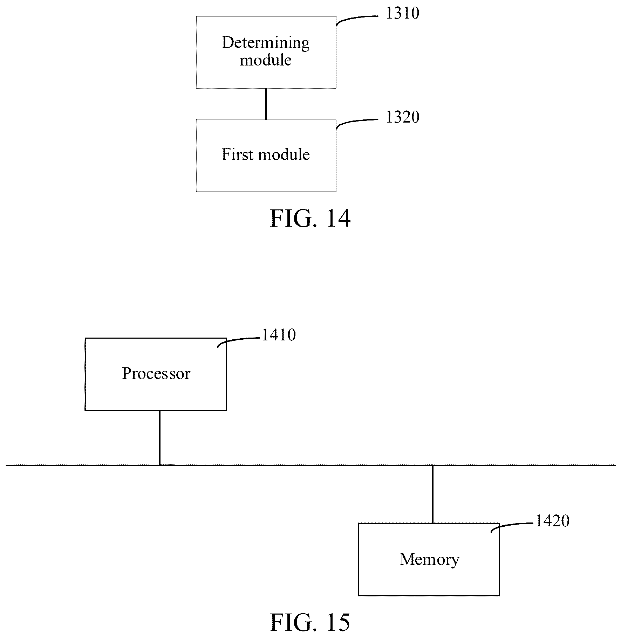

As shown in FIG. 14, an embodiment of the present disclosure further provides an apparatus for processing block data deployed on an electronic device. The apparatus includes a determining module 1310 and a first module 1320.

The determining module 1310 is configured for determining a voting power required by a service party.

The first module 1320 is configured for constructing a group of nodes for the service party according to the voting power required by the service party. The group of nodes comprises a service node belonging to the service party and at least one shadow node for the service node. The service node is configured to perform processing on block data according to a locally stored block ledger. The at least one shadow node is configured to perform processing, which is consistent with the processing performed by the service node, on the block data. The at least one shadow node does not store the block ledger locally.

In all embodiments of the present disclosure, the first module 1320 may comprise a first unit and a second unit.

The first unit is configured for configuring one or more shadow nodes for the service node according to the voting power required by the service party.

The second unit is configured for configuring initial settings of each shadow node. The at least one shadow node with the configured initial settings and the service node form the group of nodes for the service party.

In all embodiments of the present disclosure, the second unit may comprise a first subunit, a second subunit, and a third subunit.

The first subunit is configured for configuring node mapping information between the shadow node and the service node. The node mapping information indicates the shadow node is for the service node.

The second subunit is configured for configuring default-operation information of the shadow node. The default-operation information indicates an action which the shadow node performs when not receiving an instruction transmitted by the service node.

The third subunit is configured for configuring a timeout period of the shadow node for waiting the instruction.

In combination with FIG. 14, a specific implementation process of the apparatus for processing block data according to the present disclosure will be described: the determining module 1310 determines a voting power required by a service party; a first module 1320 constructs a group of nodes according to the voting power required by the service party. Specifically, the group of nodes includes a service node of the service party and at least one shadow node. The service node of the service party is configured to perform processing on block data according to a locally stored block ledger. The block data processing performed by the shadow node is kept consistent with the block data processing performed by the service node of the service party. The shadow node does not store the block ledger locally. In this way, the shadow node can perform proposal processing, lock-on-block processing, or block commitment processing according to the instruction of the service node of the service party to complete consensus on information of the block. Therefore, the shadow node does not need to store the relevant ledger data of the blockchain network and can perform processing consistent with that of the service node of the service party or default processing, thus reducing the amount of resources occupied by a service party with a high voting power, and improving the operation efficiency of the blockchain network.

An embodiment of the present disclosure further provides an apparatus for processing block data deployed on a shadow node. The apparatus comprises a second module 1330, a third module 1340, and a fourth module 1350. The second module 1330 is configured for, in response to receiving a proposal instruction transmitted by a service node belonging to a service party, extracting information of a block from the proposal instruction to generate a proposal message. The proposal message is configured to trigger each node in a blockchain network to vote for whether to lock on the block, the service node and the shadow node are in a group of nodes for the service party, and the group of nodes is constructed through any aforementioned method.

The third module 1340 is configured for, in response to receiving a lock-on-block voting instruction transmitted by the service node, extracting a first vote content from the lock-on-block voting instruction, and voting, using the first vote content, for whether to lock on the block indicated in the proposal message.

The fourth module 1350 is configured for, in response to receiving a block-commit voting instruction transmitted by the service node, extracting a second vote content from the block-commit voting instruction, and voting, using the second vote content, for whether to commit the block indicated in the proposal message to complete consensus on the block. The second vote content indicates a voting result of each service node on whether to lock on the block.

The contents in the method for processing block data embodiment shown above are applicable to the apparatus for processing block data embodiment, the specific functions implemented by the apparatus for processing block data embodiment are the same as those implemented the method for processing block data embodiment shown above, and the beneficial effects achieved are also the same as those achieved by the method for processing block data embodiment shown above.

In all embodiments of the present disclosure, the second module 1330 may comprise a third unit and a fourth unit.

The third unit is configured for monitoring, within a preset waiting period after the shadow node becomes a proposal node, whether the proposal instruction is received from the service node.

The fourth unit is configured for, in response to receiving the proposal instruction from the service node within the preset waiting period, extracting the information of the block from the proposal instruction, and generating a secondary proposal for the shadow node using the information of the block. The proposal message carries the secondary proposal.

In all embodiments of the present disclosure, the apparatus may further comprise a fifth module.

The fifth module is configured for, in response to not receiving the proposal instruction from the service node within the preset waiting period, generating a default proposal configured for the shadow node. The proposal message carries the default proposal.

In all embodiments of the present disclosure, the apparatus may further comprise a fifth unit.

The fifth unit is configured for broadcasting the proposal message to each node in the blockchain network.

The third module comprises a sixth unit, a seventh unit, and an eighth unit.

The sixth unit is configured for monitoring, within a preset waiting period after the shadow node as the proposal node broadcasts the proposal message to each node in the blockchain network, whether the lock-on-block voting instruction is received from the service node.

The seventh unit is configured for, in response to receiving the lock-on-block voting instruction from the service node within the preset waiting period, extracting the first vote content from the lock-on-block voting instruction, determining a first vote of the shadow node using the first vote content, and generating a first voting message indicating the first vote

The eighth unit is configured for broadcasting the first voting message to each node in the blockchain network.

In all embodiments of the present disclosure, the apparatus may further comprise a sixth module.

The sixth module is configured for, in response to not receiving the lock-on-block voting instruction from the service node within the preset waiting period, generating a second voting message which is a default configured for the shadow node, and broadcasting the second voting message to each node in the blockchain network.

In all embodiments of the present disclosure, the apparatus may further comprise a fifth unit.

The fifth unit is configured for broadcasting the proposal message to each node in the blockchain network.

The third module comprises a ninth unit and a tenth unit.

The ninth unit is configured for monitoring, within a preset waiting period after the shadow node becomes not the proposal node, a proposal message from another node.

The tenth unit is configured for in response to receiving a proposal message from the service node, generating a third voting message which is a default configured for the shadow node, and broadcasting the third voting message to each node in the blockchain network.

In all embodiments of the present disclosure, the apparatus may further comprise an eleventh unit and a twelfth unit.

The eleventh unit is configured for, in response to receiving a proposal message not from the service node, monitoring, within a preset waiting period after receiving the proposal message not from the service node, whether the lock-on-block voting instruction is received from the service node of the service party.

The twelfth unit is configured for, in response to receiving the lock-on-block voting instruction from the service node within the preset waiting time, generating a fourth voting message and broadcasting the fourth voting message to each node in the blockchain network.

In all embodiments of the present disclosure, the fourth module may comprise a thirteenth unit, a fourteenth unit, a fifteenth unit, and a sixteenth unit.

The thirteenth unit is configured for acquiring a voting message from another node for whether to lock on the block.

The fourteenth unit is configured for monitoring, within a preset waiting period after acquiring the voting message, whether the block-commit voting instruction is received from the service node.

The fifteenth unit configured to, in response to receiving the block-commit voting instruction from the service node within the preset waiting period, extracting the second vote content from the block-commit voting instruction, obtaining a second vote of the shadow node using the second vote content, and generating a fifth voting message indicating the second vote.

The sixteenth unit is configured for broadcasting the fifth voting message to each node in the blockchain network.

In all embodiments of the present disclosure, the apparatus may further comprise a seventh module.

The seventh module is configured for, in response to not receiving the block-commit voting instruction from the service node within the preset waiting period, generating a sixth voting message which is a default configured for the shadow node, and broadcasting the sixth voting message to each node in the blockchain network.

An embodiment of the present disclosure provides an apparatus for processing block data for a blockchain network. The blockchain network includes a plurality of nodes. The apparatus is deployed on an electronic device and comprises a determining module, a calculating module, and a configuring module.

The determining module is configured for determining a service node belonging to a service party from the plurality of nodes of the blockchain network.

The calculation module is configured for calculating a quantity of shadow nodes to be configured for the service node of the service party according to a voting weight required by the service party on the service node and a quantity of nodes in the blockchain network.

The configuring module is configured for configuring at least one shadow node for the service node according to the quantity of shadow nodes.

The service node stores a block ledger for processing the block data, processing performed by the at least one shadow node on the block data is consistent with processing performed by the service node on the block data, and the at least one shadow node does not store the block ledger locally.

In all embodiments of the present disclosure, the configuration module may configured for: configuring node mapping information between the shadow node and the service node, where the node mapping information indicates the shadow node is for the service node; configuring default-operation information of the shadow node, where the default-operation information indicates an action which the shadow node performs when not receiving an instruction transmitted by the service node; and configuring a timeout period of the shadow node for waiting the instruction.

As shown in FIG. 15, an embodiment of the present disclosure further provides an electronic device. The electronic device includes a processor 1410 and a memory 1420; the memory 1420 has a program stored therein; the processor 1410 executes the program to implement the method for processing block data described above; the electronic device has a function of carrying and running a software system for service data processing according to the embodiment of the present disclosure, and may be, for example, a personal computer (PC), a mobile phone, a smart phone, a personal digital assistant (PDA), a wearable device, a pocket PC (PPC), a tablet, and a vehicle-mounted terminal.

The contents in the method for processing block data embodiment shown above are applicable to the electronic device embodiment, the specific functions implemented by the electronic device embodiment are the same as those implemented the method for processing block data embodiment shown above, and the beneficial effects achieved are also the same as those achieved by the method for processing block data embodiment shown above.

An embodiment of the present disclosure further provides a computer-readable storage medium. The storage medium has a computer program stored therein. The computer program is executed by a processor to implement the method for processing block data described above. Moreover, an embodiment of the present disclosure further provides a computer program product. The computer program product includes a computer program. The computer program is stored in a computer-readable storage medium. A processor of an electronic device may read the computer program from the computer-readable storage medium. The processor executes the computer program to cause the electronic device to perform the method for processing block data described above.

The contents in the method for processing block data embodiment shown above are applicable to the computer-readable storage medium embodiment, the specific functions implemented by the computer-readable storage medium embodiment are the same as those implemented the method for processing block data embodiment shown above, and the beneficial effects achieved are also the same as those achieved by the method for processing block data embodiment shown above.

The contents in the method for processing block data embodiment shown above are applicable to the computer program product embodiment, the specific functions implemented by the computer program product embodiment are the same as those implemented the method for processing block data embodiment shown above, and the beneficial effects achieved are also the same as those achieved by the method for processing block data embodiment shown above.

In some alternative embodiments, the functions/operations mentioned in the block diagrams may not occur in the order mentioned in the operation diagrams. For example, depending on the functions/operations involved, two consecutive boxes may actually be executed substantially and simultaneously or boxes may sometimes be executed in a reverse order. In addition, the embodiments presented and described in the flowcharts of the present disclosure are provided by way of examples in order to provide a more comprehensive understanding of the technology. The disclosed methods are not limited to the operations and logical processes presented herein. The alternative embodiments are predictable, where the order of various operations is changed and sub-operations described as part of larger operations are independently executed.

From the embodiments provided in the above specification, it is clear that the technical solution of the present disclosure has at least the following beneficial effects:

In some alternative embodiments, the functions/operations mentioned in the block diagrams may not occur in the order mentioned in the operation diagrams. For example, depending on the functions/operations involved, two consecutive boxes may actually be executed substantially and simultaneously or boxes may sometimes be executed in a reverse order. In addition, the embodiments presented and described in the flowcharts of the present disclosure are provided by way of examples in order to provide a more comprehensive understanding of the technology. The disclosed methods are not limited to the operations and logical processes presented herein. The alternative embodiments are predictable, where the order of various operations is changed and sub-operations described as part of larger operations are independently executed.

In addition, although the present disclosure is described in the context of functional modules, unless otherwise stated to the contrary, one or more of the functions and/or features described may be integrated into a single physical apparatus and/or software module, or one or more functions and/or features may be implemented in a separate physical apparatus or software module. A detailed discussion about the actual implementation of each module is unnecessary for understanding the present disclosure. More precisely, considering the attributes, functions, and internal relationships of various functional modules in the apparatus disclosed herein, the actual implementation of the modules will be understood within the conventional technology of engineers. Therefore, those skilled in the art can implement the present disclosure as described in the claims by adopting ordinary techniques without carrying excessive tests. The specific concepts disclosed are only descriptive and are not intended to limit the scope of the present disclosure. The scope of the present disclosure is determined by the full scope of the attached claims and their equivalents.

In a case that the functions are implemented in the form of a software functional unit and sold or used as an independent product, the functions may be stored in a computer-readable storage medium. Based on such an understanding, the technical solutions of the present disclosure essentially, or the part contributing to the related art, or some of the technical solutions may be implemented in a form of a software product. The computer software product is stored in a storage medium, and includes several instructions for instructing a computer device (which may be a personal computer, a server, or a network device) to perform all or some of the operations of the methods described in the embodiments of the present disclosure. The storage medium includes various media capable of storing program codes, such as a USB flash drive, a mobile hard disk, a read-only memory (ROM), a random access memory (RAM), a magnetic disk, and an optical disc.

The logic and/or operations shown in the flowcharts or described in any other manner herein, for example, a sequenced list that may be considered as executable instructions configured for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the specification of the present disclosure, the "computer-readable medium" may be any apparatus that can include, store, communicate, propagate, or transmit programs to be used by the instruction execution system, apparatus or device or to be used in combination with the instruction execution system, apparatus or device.

More specific examples (non-exhaustive) of the computer-readable medium include the following: an electrical connection (electronic apparatus) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium may even be paper or other suitable media on which the program can be printed, because the program may be obtained electronically by, for example, optically scanning paper or other media, then editing, interpreting, or processing in other suitable ways if necessary, and then storing it in a computer memory.

All parts of the present disclosure may be implemented by using hardware, software, firmware, or a combination thereof. In the above implementations, a plurality of operations or methods may be implemented by using software or firmware that are stored in a memory and are executed by a proper instruction execution system. For example, if hardware is configured to carry out implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the descriptions of this specification, descriptions of a reference term such as "an embodiment," "some embodiments," "an example," "a specific example," or "some examples" means that a feature, structure, material, or characteristic i.e., described with reference to the embodiment or the example is included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, those skilled in the art may understand that a variety of changes, modifications, substitutions, and variations may be made to these embodiments without departing from the principle and the purpose of the present disclosure, and the scope of the present disclosure is defined by the claims and their equivalents.

What are specifically described above are exemplary embodiments of the present disclosure, but the present disclosure is not limited to the embodiments described above. Those skilled in the art may further make various equivalent modifications or replacements without departing from the spirit of the present disclosure, which, however, are all included within the scope defined by the claims of the present disclosure.

## Claims

1. A method for processing block data, executable by an electronic device, comprising:
determining a voting power required by a service party; and
constructing a group of nodes for the service party according to the voting power required by the service party, wherein the group of nodes comprises a service node belonging to the service party and at least one shadow node for the service node;
wherein the service node is configured to perform processing on block data according to a locally stored block ledger; and
wherein the at least one shadow node is configured to perform processing, which is consistent with the processing performed by the service node, on the block data; and
wherein the at least one shadow node does not store the block ledger locally.

2. The method according to claim 1, wherein constructing the group of nodes for the service party according to the voting power required by the service party comprises:
configuring one or more shadow nodes for the service node according to the voting power required by the service party; and
configuring initial settings of each shadow node;
wherein the at least one shadow node with the configured initial settings and the service node form the group of nodes for the service party.

3. The method according to claim 2, wherein configuring initial settings of each shadow node comprises:
configuring node mapping information between the shadow node and the service node, wherein the node mapping information indicates the shadow node is for the service node;
configuring default-operation information of the shadow node, wherein the default-operation information indicates an action which the shadow node performs when not receiving an instruction transmitted by the service node; and
configuring a timeout period of the shadow node for waiting the instruction.

4. A method for processing block data, executable by a shadow node, comprising:
in response to receiving a proposal instruction transmitted by a service node belonging to a service party, extracting information of a block from the proposal instruction to generate a proposal message, wherein the proposal message is configured to trigger each node in a blockchain network to vote for whether to lock on the block, the service node and the shadow node are in a group of nodes for the service party, and the group of nodes is constructed through the method according to any one of claims 1 to 3;
in response to receiving a lock-on-block voting instruction transmitted by the service node, extracting a first vote content from the lock-on-block voting instruction, and voting, using the first vote content, for whether to lock on the block indicated in the proposal message; and
in response to receiving a block-commit voting instruction transmitted by the service node, extracting a second vote content from the block-commit voting instruction, and voting, using the second vote content, for whether to commit the block indicated in the proposal message to complete consensus on the block, wherein the second vote content indicates a voting result of each service node on whether to lock on the block.

5. The method according to claim 4, wherein in response to receiving the proposal instruction transmitted by the service node belonging to the service party, extracting the information of the block from the proposal instruction to generate the proposal message, comprises:
monitoring, within a preset waiting period after the shadow node becomes a proposal node, whether the proposal instruction is received from the service node; and
in response to receiving the proposal instruction from the service node within the preset waiting period, extracting the information of the block from the proposal instruction, and generating a secondary proposal for the shadow node using the information of the block, wherein the proposal message carries the secondary proposal.

6. The method according to claim 5, further comprising:
in response to not receiving the proposal instruction from the service node within the preset waiting period, generating a default proposal configured for the shadow node, wherein the proposal message carries the default proposal.

7. The method according to claim 5, further comprising:
broadcasting the proposal message to each node in the blockchain network; and
wherein in response to receiving the lock-on-block voting instruction transmitted by the service node, extracting the first vote content from the lock-on-block voting instruction, and voting, using the first vote content, for whether to lock on the block indicated in the proposal message comprises:
monitoring, within a preset waiting period after the shadow node as the proposal node broadcasts the proposal message to each node in the blockchain network, whether the lock-on-block voting instruction is received from the service node; and
in response to receiving the lock-on-block voting instruction from the service node within the preset waiting period, extracting the first vote content from the lock-on-block voting instruction, determining a first vote of the shadow node using the first vote content, and generating a first voting message indicating the first vote; and
broadcasting the first voting message to each node in the blockchain network.

8. The method according to claim 7, further comprising:
in response to not receiving the lock-on-block voting instruction from the service node within the preset waiting period, generating a second voting message which is a default configured for the shadow node, and broadcasting the second voting message to each node in the blockchain network.

9. The method according to claim 5, further comprising:
broadcasting the proposal message to each node in the blockchain network; and
wherein in response to receiving the lock-on-block voting instruction transmitted by the service node, extracting the first vote content from the lock-on-block voting instruction, and voting, using the first vote content, for whether to lock on the block indicated in the proposal message comprises:
monitoring, within a preset waiting period after the shadow node becomes not the proposal node, a proposal message from another node; and
in response to receiving a proposal message from the service node, generating a third voting message which is a default configured for the shadow node, and broadcasting the third voting message to each node in the blockchain network.

10. The method according to claim 9, further comprising:
in response to receiving a proposal message not from the service node,
monitoring, within a preset waiting period after receiving the proposal message not from the service node, whether the lock-on-block voting instruction is received from the service node of the service party; and
in response to receiving the lock-on-block voting instruction from the service node within the preset waiting time, generating a fourth voting message and broadcasting the fourth voting message to each node in the blockchain network.

11. The method according to claim 4, wherein in response to receiving the block-commit voting instruction transmitted by the service node, extracting the second vote content from the block-commit voting instruction, and voting, using the second vote content, for whether to commit the block indicated in the proposal message comprises:
acquiring a voting message from another node for whether to lock on the block;
monitoring, within a preset waiting period after acquiring the voting message, whether the block-commit voting instruction is received from the service node;
in response to receiving the block-commit voting instruction from the service node within the preset waiting period, extracting the second vote content from the block-commit voting instruction, obtaining a second vote of the shadow node using the second vote content, and generating a fifth voting message indicating the second vote; and
broadcasting the fifth voting message to each node in the blockchain network.

12. The method according to claim 11, further comprising:
in response to not receiving the block-commit voting instruction from the service node within the preset waiting period, generating a sixth voting message which is a default configured for the shadow node, and broadcasting the sixth voting message to each node in the blockchain network.

13. A method for processing block data of a blockchain network, executable by an electronic device, wherein blockchain network comprises a plurality of nodes, the method comprises:
determining a service node belonging to a service party from the plurality of nodes of the blockchain network;
calculating a quantity of shadow nodes to be configured for the service node of the service party according to a voting weight required by the service party on the service node and a quantity of nodes in the blockchain network; and
configuring at least one shadow node for the service node according to the quantity of shadow nodes,
wherein the service node stores a block ledger for processing the block data, processing performed by the at least one shadow node on the block data is consistent with processing performed by the service node on the block data, and the at least one shadow node does not store the block ledger locally.

14. The method according to claim 13, wherein configuring the at least one shadow node for the service node according to the quantity of shadow node comprises:
configuring node mapping information between the shadow node and the service node, wherein the node mapping information indicates the shadow node is for the service node;
configuring default-operation information of the shadow node, wherein the default-operation information indicates an action which the shadow node performs when not receiving an instruction transmitted by the service node; and
configuring a timeout period of the shadow node for waiting the instruction.

15. An apparatus for processing block data, deployed on an electronic device, comprising:
a determining module, configured for determining a voting power required by a service party; and
a first module, configured for constructing a group of nodes for the service party according to the voting power required by the service party, wherein the group of nodes comprises a service node belonging to the service party and at least one shadow node for the service node;
wherein the service node is configured to perform processing on block data according to a locally stored block ledger; and
wherein the at least one shadow node is configured to perform processing, which is consistent with the processing performed by the service node, on the block data; and
wherein the at least one shadow node does not store the block ledger locally.

16. An apparatus for processing block data, deployed on a shadow node, comprising:
a second module, configure for in response to receiving a proposal instruction transmitted by a service node belonging to a service party, extracting information of a block from the proposal instruction to generate a proposal message, wherein the proposal message is configured to trigger each node in a blockchain network to vote for whether to lock on the block, the service node and the shadow node are in a group of nodes for the service party, the group of nodes is constructed through the method according to any one of claims 1 to 3;
a third module, configured for in response to receiving a lock-on-block voting instruction transmitted by the service node, extracting a first vote content from the lock-on-block voting instruction, and voting, using the first vote content, for whether to lock on the block indicated in the proposal message; and
a fourth module, configured for in response to receiving a block-commit voting instruction transmitted by the service node, extracting a second vote content from the block-commit voting instruction, and voting, using the second vote content, for whether to commit the block indicated in the proposal message to complete consensus on the block, wherein the second vote content indicates a voting result of each service node on whether to lock on the block.

17. An apparatus for processing block data of a blockchain network, deployed on an electronic device, wherein blockchain network comprises a plurality of nodes, the apparatus comprises:
a determining module, configured for determining a service node belonging to a service party from the plurality of nodes of the blockchain network;
a calculating module, configured for calculating a quantity of shadow nodes to be configured for the service node of the service party according to a voting power required by the service party on the service node and a quantity of nodes in the blockchain network; and
a configuring module, configured for configuring at least one shadow node for the service node according to the quantity of shadow nodes,
wherein the service node stores a block ledger for processing the block data, processing performed by the at least one shadow node on the block data is consistent with processing performed by the service node on the block data, and the at least one shadow node does not store the block ledger locally.

18. An electronic device, comprising a processor and a memory, wherein:
the memory is configured to store a program; and
the program when executed by the processor implements the method according to any one of claims 1 to 14.

19. A computer-readable storage medium, storing a computer program, wherein the computer program when executed by a processor implements the method according to any one of claims 1 to 14.

20. A computer program product, comprising a computer program, the computer program when executed by a processor implements the method according to any one of claims 1 to 14.
